(19) Europäisches Patentamt
European Patent Office
Office européen des brevets

(11) **EP 4 524 118 A1**

(12) **EUROPEAN PATENT APPLICATION**
published in accordance with Art. 153(4) EPC

(43) Date of publication:
**19.03.2025 Bulletin 2025/12**

(21) Application number: **23803501.8**

(22) Date of filing: **28.04.2023**

(51) International Patent Classification (IPC):
***C03C 3/091*** *(2006.01)* ***C03C 3/085*** *(2006.01)*
***C03C 3/087*** *(2006.01)*

(52) Cooperative Patent Classification (CPC):
**C03C 3/085; C03C 3/087; C03C 3/091**

(86) International application number:
**PCT/JP2023/016980**

(87) International publication number:
**WO 2023/219023 (16.11.2023 Gazette 2023/46)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **09.05.2022 JP 2022077216**

(71) Applicant: **AGC INC.**
**Chiyoda-ku,**
**Tokyo 1008405 (JP)**

(72) Inventors:
- **KATO, Takeyuki**
  **Tokyo 100-8405 (JP)**
- **HAMADA, Yuya**
  **Tokyo 100-8405 (JP)**
- **INABA, Seiji**
  **Tokyo 100-8405 (JP)**

(74) Representative: **Müller-Boré & Partner Patentanwälte PartG mbB**
**Friedenheimer Brücke 21**
**80639 München (DE)**

# (54) GLASS, GLASS SHEET, AND METHOD FOR PRODUCING GLASS SHEET

(57) Provided is glass which has a low dielectric loss tangent in a high frequency region and which exhibits excellent chemical resistance and moisture resistance. This glass contains, in terms of mol% on an oxide basis, 68% or more of SiO $O_2$, 0.1 to 8% of $Al_2O_3$, 88% or more of [$SiO_2$]+[$B_2O_3$] and 27% or less of [$B_2O_3$]-([RO] +[$R_2O$]-[$Al_2O_3$]), has a relative dielectric constant of 4.5 or less at a temperature of 25°C and a frequency of 10 GHz, has a dielectric loss tangent of 0.005 or less at a temperature of 25°C and a frequency of 10 GHz, has a ΔAbs-OH value of 4.0 or less, contains 0.1 to 4% of SrO, has a total content (RO) of MgO, CaO, SrO and BaO of more than 0% to 6%, has a total content ($R_2O$) of $Li_2O$, $Na_2O$ and $K_2O$ of 0-1%, has a [$Al_2O_3$]-[RO] value of -3% to less than 8%, has a [$Al_2O_3$]×[RO] value of more than 0 to 30, has a [MgO]+[CaO] value of 0.1-5.9%, and has a [MgO]/([MgO]+[$Al_2O_3$]) value of 0-0.45.

*FIG. 2*

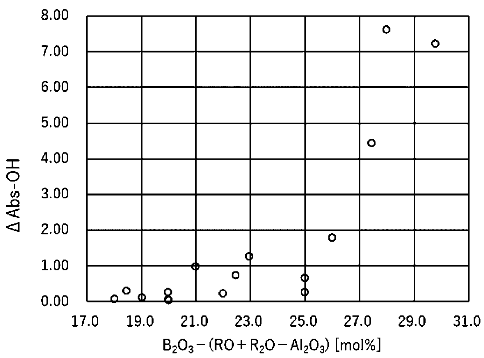


EP 4 524 118 A1

## Description

TECHNICAL FIELD

The present invention relates to a glass, a glass sheet, and a production method therefor suitable for a glass substrate for a high frequency device, a panel antenna, a window glass, a vehicular window glass, and a display panel.

BACKGROUND ART

There are electronic devices such as communication devices such as a mobile phone, a smartphone, a portable information terminal, and a Wi-Fi device, a surface acoustic wave (SAW) device, a radar component, and an antenna component. In such electronic devices, in order to increase a communication capacity, increase a communication speed, and the like, a high frequency of a signal frequency is advanced. An insulating substrate such as a resin substrate, a ceramic substrate, or a glass substrate is generally used as a circuit substrate for use in an electronic device for a high frequency application. An insulating substrate for use in a high frequency device is required to reduce a transmission loss based on a dielectric loss, a conductor loss, and the like in order to ensure properties such as a quality and intensity of a high frequency signal.

Among these insulating substrates, the resin substrate has low rigidity due to properties thereof. Therefore, when the rigidity (strength) is required for a semiconductor package product, it is difficult to apply the resin substrate. It is difficult to improve smoothness of a surface of the ceramic substrate, and accordingly, there is a disadvantage that the conductor loss caused by a conductor formed on the substrate surface tends to increase. On the other hand, since the glass substrate has high rigidity, it is easy to reduce a size and a thickness of the package, it is excellent in surface smoothness, and it is easy to increase the size of the substrate itself.

Patent Literature 1 discloses a glass substrate for a high frequency device having a dielectric loss tangent of 0.007 or less at a frequency of 35 GHz.

CITATION LIST

PATENT LITERATURE

Patent Literature 1: WO 2018/051793

SUMMARY OF INVENTION

TECHNICAL PROBLEM

In recent years, in addition to reducing the dielectric loss tangent in a high frequency region, the glass substrate for the above application is required to have excellent chemical resistance. In a production process for a circuit substrate of a liquid crystal antenna, a high frequency device, or the like, chemical cleaning is performed as a pretreatment of forming a wiring layer on the glass substrate. When chemical resistance of the glass is low, for example, a substrate surface may be dissolved during acid cleaning, and the smoothness of the substrate surface may be impaired, thereby decreasing the adhesion of a film formed on the substrate surface. In addition, an eluate may adhere to the substrate surface. Accordingly, the conductor loss due to the conductor formed on the substrate surface may increase.

In addition, the glass substrate for the above application is required to have excellent moisture resistance. When the moisture resistance is low, the substrate surface may deteriorate during storage, resulting in a loss of the smoothness of the substrate surface. Further, owing to the excellent moisture resistance, it can withstand use under high humidity conditions.

An object of the present invention is to provide a glass which has a low dielectric loss tangent in a high frequency region and has excellent chemical resistance and moisture resistance.

SOLUTION TO PROBLEM

The inventors of the present invention have found that when a glass has a specific composition range, the dielectric loss is reduced, the chemical resistance and the moisture resistance are improved, and the above problems can be solved. Thus, the present invention has been completed.

[1] A glass including, in mol% in terms of oxides:

68% or more of $SiO_2$;
0.1% to 8% of $Al_2O_3$; and
0.1% to 4% of SrO, in which
$[SiO_2]+[B_2O_3]$ is 88% or more,
$[B_2O_3]-([RO]+[R_2O]-[Al_2O_3])$ is 27% or less,
a relative dielectric constant at 25°C and a frequency of 10 GHz is 4.5 or less,
a dielectric loss tangent at 25°C and a frequency of 10 GHz is 0.005 or less,
ΔAbs-OH as calculated by the following method is 4.0 or less,
a total content (RO) of MgO, CaO, SrO, and BaO is more than 0% to 6%,
a total content ($R_2O$) of $Li_2O$, $Na_2O$, and $K_2O$ is 0% to 1%,
$[Al_2O_3]-[RO]$ is -3% to less than 8%,
$[Al_2O_3]\times[RO]$ is more than 0 to 30,
[MgO]+[CaO] is 0.1% to 5.9%, and
$[MgO]/([MgO]+[Al_2O_3])$ is 0 to 0.45,
provided that [ ] indicates a content of a component described in the bracket expressed in mol% in terms of oxides,
method: a glass is made into a glass sheet having a thickness of 0.45 mm to 0.75 mm and Abs-OH of the glass sheet is measured, then the glass sheet is left standing at a temperature of 60°C and a relative humidity of 95%, after 90 hours from start of standing, Abs-OH of the glass sheet is measured, and a value obtained by subtracting the Abs-OH before the standing from the Abs-OH after the standing is calculated as the ΔAbs-OH.

[2] A glass including, in mol% in terms of oxides:

68% or more of $SiO_2$;
0.1% to 8% of $Al_2O_3$; and
0.1% to 6% of CaO, in which
$[SiO_2]+[B_2O_3]$ is 88% or more,
$[B_2O_3]-([RO]+[R_2O]-[Al_2O_3])$ is 27% or less,
a relative dielectric constant at 25°C and a frequency of 10 GHz is 4.5 or less,
a dielectric loss tangent at 25°C and a frequency of 10 GHz is 0.005 or less,
ΔAbs-OH as calculated by the following method is 4.0 or less,
a total content (RO) of MgO, CaO, SrO, and BaO is more than 0% to 6%,
a total content ($R_2O$) of $Li_2O$, $Na_2O$, and $K_2O$ is 0% to 1%,
$[Al_2O_3]-[RO]$ is -3% to less than 8%,
$[Al_2O_3]\times[RO]$ is more than 0 to 28, and
$(([MgO]+[CaO])-([SrO]+[BaO]))/[Al_2O_3]$ is -3.0 to 0.60,
provided that [ ] indicates a content of a component described in the bracket expressed in mol% in terms of oxides,
method: a glass is made into a glass sheet having a thickness of 0.45 mm to 0.75 mm and Abs-OH of the glass sheet is measured, then the glass sheet is left standing at a temperature of 60°C and a relative humidity of 95%, after 90 hours from start of standing, Abs-OH of the glass sheet is measured, and a value obtained by subtracting the Abs-OH before the standing from the Abs-OH after the standing is calculated as the ΔAbs-OH.

[3] A glass including, in mol% in terms of oxides:

68% or more of $SiO_2$;
0.1% to 8% of $Al_2O_3$;
more than 0% of $Li_2O$; and
more than 0% to 0.8% of $K_2O$, in which
$[SiO_2]+[B_2O_3]$ is 88% or more,
$[B_2O_3]-([RO]+[R_2O]-[Al_2O_3])$ is 27% or less,
a relative dielectric constant at 25°C and a frequency of 10 GHz is 4.5 or less,
a dielectric loss tangent at 25°C and a frequency of 10 GHz is 0.005 or less,
ΔAbs-OH as calculated by the following method is 4.0 or less,
a total content (RO) of MgO, CaO, SrO, and BaO is 0% to 0.5%,
a total content ($R_2O$) of $Li_2O$, $Na_2O$, and $K_2O$ is more than 0% to 4%,
$[Al_2O_3]\times[R_2O]$ is more than 0 to 1.40, and
$[Na_2O]/[R_2O]$ is 0.30 to 0.99,
provided that [ ] indicates a content of a component described in the bracket expressed in mol% in terms of oxides,
method: a glass is made into a glass sheet having a thickness of 0.45 mm to 0.75 mm and Abs-OH of the glass sheet is measured, then the glass sheet is left standing at a temperature of 60°C and a relative humidity of 95%, after 90 hours from start of standing, Abs-OH of the glass sheet is measured, and a value obtained by subtracting the Abs-OH before the standing from the Abs-OH after the standing is calculated as the ΔAbs-OH.

[4] The glass according to any one of [1] to [3], in which an acid resistance as calculated by the following method is 0.05 $mg/cm^2$ or less, and an alkali resistance as calculated by the following method is 0.15 $mg/cm^2$ or less:

acid resistance evaluation method: a glass is made into a rectangular glass sheet having a side length of 31 mm to 36 mm and a thickness of 0.45 mm to 0.75 mm, the glass sample is immersed in an acid aqueous solution (a 45°C aqueous solution containing 7.7 mass% of $HNO_3$ and 6.5 mass% of $H_2SO_4$) for 170 seconds, and an elution amount ($mg/cm^2$) of a glass component per unit surface area is calculated as the acid resistance, and
alkali resistance evaluation method: a glass is made into a rectangular glass sheet having a side length of 31 mm to 36 mm and a thickness of 0.45 mm to 0.75 mm, the glass sample is immersed in an alkaline aqueous solution (a 60°C aqueous solution containing 1.2 mass% of KOH) for 30 minutes, and an elution amount ($mg/cm^2$) of a glass component per unit surface area is calculated as the alkali resistance.

[5] The glass according to any one of [1] to [4], further including:
0.01% or more of Cl in mol% in terms of oxides.
[6] The glass according to any one of [1] to [5], in which the Abs-OH is 0.1 to 10.0.
[7] The glass according to any one of [1] to [6], having an average thermal expansion coefficient at 50°C to 350°C of $20 \times 10^{-7}$/K to $50 \times 10^{-7}$/K.
[8] The glass according to any one of [1] to [7], having a glass transition temperature of 750°C or lower.
[9] A glass sheet including:

the glass according to any one of [1] to [8], in which
the glass sheet has a main surface and an end surface and has a thickness of 0.75 mm or less.

[10] A glass sheet production method including:
producing the glass according to any one of [1] to [8] by a float method or a fusion method.
[11] A glass substrate including the glass according to any one of [1] to [8], in which the glass substrate is used in a high frequency device that copes with a high frequency signal at 10 GHz or more.
[12] A glass substrate including:

the glass according to any one of [1] to [8], in which
a wiring layer is formed on the glass substrate.

## ADVANTAGEOUS EFFECTS OF INVENTION

The glass according to the present invention has a low dielectric loss tangent in a high frequency region. Therefore, a dielectric loss of a high frequency signal can be reduced, and the glass is suitable for a glass substrate for a high frequency device. According to a circuit substrate using such a glass substrate, it is possible to reduce a transmission loss of the high frequency signal and to provide a high frequency device such as a practical electronic device.

The glass according to the present invention has excellent chemical resistance. Therefore, when a glass substrate is subjected to acid cleaning in a production process for a circuit substrate of a liquid crystal antenna, a high frequency device, or the like, there is no chance that a substrate surface is dissolved and the smoothness of the substrate surface deteriorates, or an eluate adheres to the substrate surface. Therefore, a decrease in adhesion of a film formed on the substrate surface can be prevented. In addition, an increase in conductor loss can be prevented.

The glass according to the present invention can reduce a transmission loss of radio waves in a high frequency band. Therefore, it is also suitable for a glass product that transmits and receives the radio waves in a high frequency band.

The glass according to the present invention has excellent moisture resistance. Therefore, deterioration during storage can be prevented. In addition, a glass suitable for use under high temperature and high humidity conditions is obtained.

## BRIEF DESCRIPTION OF DRAWINGS

FIG. 1 is a schematic cross-sectional view showing an example of a configuration of a circuit substrate for a high frequency device.

FIG. 2 is a graph showing a relationship between $[B_2O_3]$-([RO]+$[R_2O]$-$[Al_2O_3]$) and ΔAbs-OH.

FIG. 3 is a graph showing a relationship between Cl and Abs-OH in Examples 13 to 16.

FIG. 4 is a graph showing a relationship between Abs-OH and a relative dielectric constant and a dielectric loss tangent at a frequency of 10 GHz in Examples 13 to 16.

DESCRIPTION OF EMBODIMENTS

Hereinafter, an embodiment of the present invention will be described. The present invention provides a glass, containing, in mol% in terms of oxides:

68% or more of $SiO_2$;
0.1% to 8% of $Al_2O_3$; and
0.1% to 4% of SrO, in which
$[SiO_2]$+$[B_2O_3]$ is 88% or more,
$[B_2O_3]$-([RO]+$[R_2O]$-$[Al_2O_3]$) is 27% or less,
a relative dielectric constant at 25°C and a frequency of 10 GHz is 4.5 or less,
a dielectric loss tangent at 25°C and a frequency of 10 GHz is 0.005 or less,
ΔAbs-OH is 4.0 or less,
a total content (RO) of MgO, CaO, SrO, and BaO is more than 0% to 6%,
a total content ($R_2O$) of $Li_2O$, $Na_2O$, and $K_2O$ is 0% to 1%,
$[Al_2O_3]$-[RO] is -3% to less than 8%,
$[Al_2O_3]\times$[RO] is more than 0 to 30,
[MgO]+[CaO] is 0.1% to 5.9%, and
[MgO]/([MgO]+$[Al_2O_3]$) is 0 to 0.45 (hereinafter, referred to as a "glass according to a first embodiment").

In addition, the present invention provides a glass, containing, in mol% in terms of oxides:

68% or more of $SiO_2$;
0.1% to 8% of $Al_2O_3$; and
0.1% to 6% of CaO, in which
$[SiO_2]$+$[B_2O_3]$ is 88% or more,
$[B_2O_3]$-([RO]+$[R_2O]$-$[Al_2O_3]$) is 27% or less,
a relative dielectric constant at 25°C and a frequency of 10 GHz is 4.5 or less,
a dielectric loss tangent at 25°C and a frequency of 10 GHz is 0.005 or less,
ΔAbs-OH is 4.0 or less,
a total content (RO) of MgO, CaO, SrO, and BaO is more than 0% to 6%,
a total content ($R_2O$) of $Li_2O$, $Na_2O$, and $K_2O$ is 0% to 1%,
$[Al_2O_3]$-[RO] is -3% to less than 8%,
$[Al_2O_3]\times$[RO] is more than 0 to 28, and
(([MgO]+[CaO])-([SrO]+[BaO]))/$[Al_2O_3]$ is -3.0 to 0.60 (hereinafter, referred to as a "glass according to a second embodiment").

Further, the present invention provides a glass, containing, in mol% in terms of oxides:

68% or more of $SiO_2$;
0.1% to 8% of $Al_2O_3$;
more than 0% of $Li_2O$; and
more than 0% to 0.8% of $K_2O$, in which
$[SiO_2]$+$[B_2O_3]$ is 88% or more,
$[B_2O_3]$-([RO]+$[R_2O]$-$[Al_2O_3]$) is 27% or less,
a relative dielectric constant at 25°C and a frequency of 10 GHz is 4.5 or less,
a dielectric loss tangent at 25°C and a frequency of 10 GHz is 0.005 or less,
ΔAbs-OH is 4.0 or less,
a total content (RO) of MgO, CaO, SrO, and BaO is 0% to 0.5%,
a total content ($R_2O$) of $Li_2O$, $Na_2O$, and $K_2O$ is more than 0% to 4%,
$[Al_2O_3]\times[R_2O]$ is more than 0 to 1.40, and
$[Na_2O]/[R_2O]$ is 0.30 to 0.99 (hereinafter, referred to as a "glass according to a third embodiment").

In the present description, the "glass according to the present invention" includes the glass according to the first embodiment, the glass according to the second embodiment, and the glass according to the third embodiment. In the glasses according to the first to third embodiments, [ ] in each expression indicates a content of a component described in the bracket expressed in mol% in terms of oxides.

Note that, in the following description, a numerical value range indicated by using "to" indicates a range including numerical values described before and after "to" as a minimum value and a maximum value, respectively. Unless otherwise specified, a content of each component in a glass or a glass sheet indicates a molar percentage (mol%) in terms of oxides, and is also simply expressed as "%".

Note that, the "high frequency" in the present description refers to a frequency of 10 GHz or more, preferably more than 30 GHz, and more preferably 35 GHz or more. In addition, the "high frequency" refers to a frequency of 3 THz or less, preferably 1 THz or less, more preferably 300 GHz or less, and still more preferably 100 GHz or less.

Hereinafter, the glasses according to the first to third embodiments (hereinafter, may be simply referred to as a "glass") will be described as specific embodiments of the glass according to the present invention.

[Configuration Common to Glasses According to First to Third Embodiments]

The glasses according to the first to third embodiments, that is, the glass according to the present invention have the following configuration.

It contains, in mol% in terms of oxides,
68% or more of $SiO_2$, and
0.1% to 8% of $Al_2O_3$, in which
$[SiO_2]+[B_2O_3]$ is 88% or more,
$[B_2O_3]-([RO]+[R_2O]-[Al_2O_3])$ is 27% or less,
a relative dielectric constant at 25°C and a frequency of 10 GHz is 4.5 or less,
a dielectric loss tangent at 25°C and a frequency of 10 GHz is 0.005 or less, and
ΔAbs-OH is 4.0 or less, as calculated by the following method.

Method: Abs-OH of a glass sheet made of a glass and having a thickness of 0.45 mm to 0.75 mm is measured, and then the glass sheet is left standing at a temperature of 60°C and a relative humidity of 95%. After 90 hours from start of standing, Abs-OH of the glass sheet is measured. A value obtained by subtracting the Abs-OH before the standing from the Abs-OH after the standing is calculated as the ΔAbs-OH.

Hereinafter, the configuration common to the glass according to the present invention will be described in detail.

$SiO_2$ is a network forming substance. The glass according to the present invention contains 68% or more of $SiO_2$. When the content of $SiO_2$ is 68% or more, it is possible to reduce the dielectric loss tangent in a high frequency region, to improve a glass forming ability and chemical resistance, and to prevent an increase in surface devitrification temperature. In the glass according to the present invention, the content of $SiO_2$ is preferably 68.3% or more, more preferably 68.5% or more, still more preferably 68.8% or more, even more preferably 69.1% or more, even still more preferably 69.4% or more, yet still more preferably 69.7% or more, yet even more preferably 70.0% or more, yet even still more preferably 70.2% or more, yet even still more preferably 70.4% or more, yet even still more preferably 70.5% or more, yet even still more preferably 70.7% or more, and further yet even still more preferably 70.9% or more.

In addition, in the glass according to the present invention, the content of $SiO_2$ is preferably 85% or less. When the content of $SiO_2$ is 85% or less, meltability of the glass can be improved. The content of $SiO_2$ is more preferably 84% or less, still more preferably 83% or less, even more preferably 82% or less, even still more preferably 81% or less, yet still more preferably 80% or less, yet even more preferably 79.5% or less, yet even still more preferably 79.0% or less, yet even still more preferably 78.5% or less, yet even still more preferably 78.0% or less, yet even still more preferably 77.5% or less, and further yet even still more preferably 77.0% or less.

The glass according to the present invention contains 0.1% to 8% of $Al_2O_3$. $Al_2O_3$ is a component having the effects of improving the chemical resistance, a Young's modulus, and a phase separation stability of the glass, decreasing a thermal expansion coefficient of the glass, and the like. When the content of $Al_2O_3$ is 0.1% or more, the chemical resistance and the phase separation stability of the glass are improved. The content of $Al_2O_3$ is preferably 0.13% or more, more preferably 0.16% or more, still more preferably 0.19% or more, even more preferably 0.22% or more, even still more preferably 0.25% or more, yet still more preferably 0.28% or more, yet even more preferably 0.31% or more, yet even still more preferably 0.34% or more, yet even still more preferably 0.37% or more, yet even still more preferably 0.4% or more, yet even still more preferably 0.43% or more, and further yet even still more preferably 0.46% or more.

In addition, in the glass according to the present invention, when the content of $Al_2O_3$ is 8% or less, the dielectric loss tangent in the high frequency region can be reduced. The content of $Al_2O_3$ is preferably 7.5% or less, more preferably 7.0% or less, still more preferably 6.8% or less, even more preferably 6.6% or less, even still more preferably 6.4% or less, yet still more preferably 6.2% or less, yet even more preferably 6.0% or less, yet even still more preferably 5.8% or less, yet even still more preferably 5.6% or less, yet even still more preferably 5.4% or less, yet even still more preferably 5.2% or less, and further yet even still more preferably 5% or less.

In the glass according to the present invention, a total content of $SiO_2$ and $B_2O_3$ ($[SiO_2]+[B_2O_3]$) is 88% or more. When $[SiO_2]+[B_2O_3]$ is 88% or more, dielectric properties are improved. In the glass according to the present invention, $[SiO_2]+[B_2O_3]$ is more preferably 88.3% or more, still more preferably 88.6% or more, even more preferably 88.9% or more, even still more preferably 89.2% or more, yet still more preferably 89.5% or more, yet even more preferably 89.8% or more, yet even still more preferably 90.1% or more, yet even still more preferably 90.4% or more, yet even still more preferably 90.7% or more, and further yet even still more preferably 91% or more.

In the glass according to the present invention, $[SiO_2]+[B_2O_3]$ is preferably 99% or less. In the glass according to the present invention, $[SiO_2]+[B_2O_3]$ is more preferably 98.8% or less, still more preferably 98.6% or less, even more preferably 98.4% or less, even still more preferably 98.2% or less, yet still more preferably 98.1% or less, yet even more preferably 98% or less, yet even still more preferably 97.9% or less, yet even still more preferably 97.8% or less, yet even still more preferably 97.7% or less, yet even still more preferably 97.6% or less, and further yet even still more preferably 97.5% or less.

In the glass according to the present invention, $[B_2O_3]-([RO]+[R_2O]-[Al_2O_3])$ is 27% or less. As the value of $[B_2O_3]-([RO]+[R_2O]-[Al_2O_3])$ is smaller, the moisture resistance of the glass is improved. Therefore, in the glass according to the present invention, $[B_2O_3]-([RO]+[R_2O]-[Al_2O_3])$ is 27% or less, preferably 26.8% or less, more preferably 26.6% or less, still more preferably 26.4% or less, even more preferably 26.2% or less, even still more preferably 26% or less, yet still more preferably 25.8% or less, yet even more preferably 25.6% or less, yet even still more preferably 25.4% or less, yet even still more preferably 25.3% or less, yet even still more preferably 25.2% or less, yet even still more preferably 25.1% or less, and further yet even still more preferably 25% or less.

In the glass according to the present invention, $[B_2O_3]-([RO]+[R_2O]-[Al_2O_3])$ is preferably 15% or more, from the viewpoint of dielectric properties. $[B_2O_3]-([RO]+[R_2O]-[Al_2O_3])$ is more preferably 16% or more, still more preferably 16.3% or more, even more preferably 16.6% or more, even still more preferably 16.9% or more, yet still more preferably 17.2% or more, yet even more preferably 17.5% or more, yet even still more preferably 17.8% or more, yet even still more preferably 18.1% or more, yet even still more preferably 18.4% or more, yet even still more preferably 18.7% or more, and further yet even still more preferably 19% or more.

In the glass according to the present invention, the ΔAbs-OH calculated by the following method is 4.0 or less.

When the ΔAbs-OH is 4.0 or less, the glass exhibits excellent moisture resistance. The ΔAbs-OH is preferably 3.5 or less, more preferably 3.0 or less, and still more preferably 2.5 or less. The ΔAbs-OH is not particularly limited in lower limit, and the ΔAbs-OH is preferably, for example, 0 or more.

Method: Abs-OH of a glass sheet made of a glass and having a thickness of 0.45 mm to 0.75 mm is measured, and then the glass sheet is left standing at a temperature of 60°C and a relative humidity of 95%. After 90 hours from start of standing, Abs-OH of the glass sheet is measured. A value obtained by subtracting the Abs-OH before the standing from the Abs-OH after the standing is calculated as the ΔAbs-OH.

$\Delta(Abs_{\beta\text{-}OH}\text{-}Abs_{Base})$ calculated by the following method is an index of the moisture resistance that is not easily influenced by a thickness of the glass sheet during measurement. In the glass according to the present invention, the $\Delta(Abs_{\beta\text{-}OH}\text{-}Abs_{Base})$ is preferably 0.2 or less.

Method: $(Abs_{\beta\text{-}OH}\text{-}Abs_{Base})$ of a glass sheet made of a glass and having a thickness of 0.45 mm to 0.75 mm is measured, and then the glass sheet is left standing at a temperature of 60°C and a relative humidity of 95%. After 90 hours from start of standing, $(Abs_{\beta\text{-}OH}\text{-}Abs_{Base})$ of the glass sheet is measured. A value obtained by subtracting the $(Abs_{\beta\text{-}OH}\text{-}Abs_{Base})$ before the standing from the $(Abs_{\beta\text{-}OH}\text{-}Abs_{Base})$ after the standing is calculated as the $\Delta(Abs_{\beta\text{-}OH}\text{-}Abs_{Base})$.

When the $\Delta(Abs_{\beta\text{-}OH}\text{-}Abs_{Base})$ is 0.2 or less, the glass exhibits excellent moisture resistance. The $\Delta(Abs_{\beta\text{-}OH}\text{-}Abs_{Base})$ is preferably 0.15 or less, more preferably 0.12 or less, still more preferably 0.1 or less, and particularly preferably 0.05 or less. The $\Delta(Abs_{\beta\text{-}OH}\text{-}Abs_{Base})$ is not particularly limited in lower limit, and the $\Delta(Abs_{\beta\text{-}OH}\text{-}Abs_{Base})$ is preferably, for example, 0 or more.

In the glass according to the present invention, the dielectric loss tangent at 20°C and 10 GHz is 0.005 or less. When the dielectric loss tangent at 20°C and a frequency of 10 GHz is 0.005 or less, the dielectric loss can be reduced in a high frequency region at a frequency of more than 10 GHz. The dielectric loss tangent at 20°C and 10 GHz is preferably 0.0045 or less, more preferably 0.0040 or less, still more preferably 0.0035 or less, even more preferably 0.0030 or less, and even still more preferably 0.0025 or less. It is not particularly limited in lower limit, and is preferably, for example, 0.0001 or more.

In the glass according to the present invention, the relative dielectric constant at 20°C and a frequency of 10 GHz is 4.5 or less. When the relative dielectric constant at a frequency of 10 GHz is 4.5 or less, the dielectric loss can be reduced in the high frequency region. The relative dielectric constant at 20°C and a frequency of 10 GHz is preferably 4.45 or less, more preferably 4.40 or less, still more preferably 4.35 or less, even more preferably 4.30 or less, even still more preferably 4.25 or less, yet still more preferably 4.20 or less, yet even more preferably 4.15 or less, and yet even still more preferably 4.10 or less. It is not particularly limited in lower limit, and is preferably, for example, 3 or more.

The glass according to the present invention has the above common configuration and therefore exhibits a low dielectric loss tangent in the high frequency region, and excellent chemical resistance and moisture resistance.

[Glass According to First Embodiment]

In addition to the above common configurations, the glass according to the first embodiment has the following configuration particularly from the viewpoint of further improving the meltability, the chemical resistance, the phase separation stability, and the dielectric properties, and preventing the increase in surface devitrification temperature.

It contains, in mol% in terms of oxides,

0.1% to 4% of SrO, in which
a total content (RO) of MgO, CaO, SrO, and BaO is more than 0% to 6%,
a total content ($R_2O$) of $Li_2O$, $Na_2O$, and $K_2O$ is 0% to 1%,
$[Al_2O_3]$-[RO] is -3% to less than 8%,
$[Al_2O_3]\times$[RO] is more than 0 to 30,
[MgO]+[CaO] is 0.1% to 5.9%, and
[MgO]/([MgO]+$[Al_2O_3]$) is 0 to 0.45.

Hereinafter, the above configuration will be described in detail.

SrO is a component that improves the moisture resistance of the glass, that does not increase the surface devitrification temperature of the glass, and that improves the meltability of the glass. The glass according to the first embodiment contains 0.1% to 4% of SrO. In the glass according to the first embodiment, when the content of SrO is 0.1% or more, the moisture resistance is improved, the surface devitrification temperature is not increased, and the meltability is improved.

In the glass according to the first embodiment, the content of SrO is preferably 0.2% or more, more preferably 0.3% or more, still more preferably 0.4% or more, even more preferably 0.5% or more, even still more preferably 0.6% or more, yet still more preferably 0.7% or more, yet even more preferably 0.8% or more, yet even still more preferably 0.9% or more, yet even still more preferably 1% or more, yet even still more preferably 1.1% or more, yet even still more preferably 1.2% or more, and further yet even still more preferably 1.3% or more.

In the glass according to the first embodiment, when the content of SrO is 4% or less, deterioration of the chemical resistance can be prevented, and the average thermal expansion coefficient can be prevented from being excessively increased without excessively increasing a specific gravity. In the glass according to the first embodiment, the content of SrO is preferably 3.8% or less, more preferably 3.6% or less, still more preferably 3.4% or less, even more preferably 3.2% or less, even still more preferably 3% or less, yet still more preferably 2.8% or less, yet even more preferably 2.6% or less, yet even still more preferably 2.4% or less, yet even still more preferably 2.2% or less, yet even still more preferably 2.0% or less, yet even still more preferably 1.8% or less, and further yet even still more preferably 1.6% or less.

MgO, CaO, SrO, and BaO are components that prevent the increase in surface devitrification temperature and that improve the meltability. In the glass according to the first embodiment, the total content (RO) of MgO, CaO, SrO, and BaO is more than 0% to 6%. In the glass according to the first embodiment, when RO is more than 0%, the increase in surface devitrification temperature is prevented, and the meltability is improved. In the glass according to the first embodiment, RO is preferably 0.1% or more, more preferably 0.3% or more, still more preferably 0.5% or more, even more preferably 0.7% or more, even still more preferably 0.9% or more, yet still more preferably 1.1% or more, yet even more preferably 1.3% or more, yet even still more preferably 1.5% or more, yet even still more preferably 1.7% or more, and further yet even still more preferably 1.9% or more.

In the glass according to the first embodiment, when RO is 6% or less, the dielectric properties and the chemical resistance are improved. In the glass according to the first embodiment, RO is preferably 5.8% or less, more preferably 5.6% or less, still more preferably 5.4% or less, even more preferably 5.2% or less, even still more preferably 5% or less, yet still more preferably 4.8% or less, yet even more preferably 4.6% or less, yet even still more preferably 4.4% or less, yet even still more preferably 4.3% or less, yet even still more preferably 4.2% or less, yet even still more preferably 4.1% or less, and further yet even still more preferably 4% or less.

$Li_2O$, $Na_2O$, and $K_2O$ are components that improve the moisture resistance and the meltability. It also has the effect of preventing the increase in surface devitrification temperature and increasing the average thermal expansion coefficient. In the glass according to the first embodiment, the total content ($R_2O$) of $Li_2O$, $Na_2O$, and $K_2O$ is 0% to 1%. In the glass according to the first embodiment, when $Li_2O$, $Na_2O$, and $K_2O$ are contained, the moisture resistance and the meltability can be improved. In the glass according to the first embodiment, in the case where $Li_2O$, $Na_2O$, and $K_2O$ are contained, $R_2O$ is preferably 0.1% or more, more preferably 0.2% or more, still more preferably 0.3% or more, even more preferably 0.4% or more, and even still more preferably 0.5% or more.

In the glass according to the first embodiment, when $R_2O$ is 1% or less, the dielectric properties are improved. In the glass according to the first embodiment, $R_2O$ is preferably 0.9% or less, more preferably 0.8% or less, still more preferably 0.7% or less, even more preferably 0.6% or less, and even still more preferably 0.5% or less.

In the glass according to the first embodiment, $[Al_2O_3]$-[RO] is -3% to less than 8%. In the glass according to the first embodiment, when $[Al_2O_3]$-[RO] is -3% or more, the phase separation stability is improved. In the glass according to the first embodiment, $[Al_2O_3]$-[RO] is preferably -2.8% or more, more preferably -2.6% or more, still more preferably -2.4% or more, even more preferably -2.2% or more, even still more preferably -2% or more, yet still more preferably -1.8% or more, yet even more preferably -1.6% or more, yet even still more preferably -1.4% or more, yet even still more preferably -1.2% or more, yet even still more preferably -1% or more, yet even still more preferably -0.8% or more, and further yet even still more preferably -0.6% or more.

In the glass according to the first embodiment, when $[Al_2O_3]$-[RO] is less than 8%, the meltability can be improved, and the increase in surface devitrification temperature can be prevented. In the glass according to the first embodiment, $[Al_2O_3]$-[RO] is preferably 7.5% or less, more preferably 7% or less, still more preferably 6.5% or less, even more preferably 6% or less, even still more preferably 5.5% or less, yet still more preferably 5% or less, yet even more preferably 4.7% or less, yet even still more preferably 4.4% or less, yet even still more preferably 4.1% or less, yet even still more preferably 3.8% or less, yet even still more preferably 3.5% or less, and further yet even still more preferably 3% or less.

In the glass according to the first embodiment, $[Al_2O_3]\times[RO]$ is more than 0 to 30. In the glass according to the first embodiment, when $[Al_2O_3]\times[RO]$ is more than 0, the phase separation stability can be improved. In the glass according to the first embodiment, $[Al_2O_3]\times[RO]$ is preferably 1 or more, more preferably 2 or more, still more preferably 3 or more, even more preferably 3.5 or more, even still more preferably 4 or more, yet still more preferably 4.5 or more, yet even more preferably 5 or more, yet even still more preferably 5.5 or less, yet even still more preferably 6 or more, yet even still more preferably 6.5 or more, yet even still more preferably 7 or more, and further yet even still more preferably 7.5 or more.

In the glass according to the first embodiment, when $[Al_2O_3]\times[RO]$ is 30 or less, the dielectric properties can be improved. In the glass according to the first embodiment, $[Al_2O_3]\times[RO]$ is preferably 29 or less, more preferably 28 or less, still more preferably 27 or less, even more preferably 26 or less, even still more preferably 25 or less, yet still more preferably 24 or less, yet even more preferably 23 or less, yet even still more preferably 22 or less, yet even still more preferably 21.5 or less, yet even still more preferably 21 or less, yet even still more preferably 20.5 or less, and further yet even still more preferably 20 or less.

In the glass according to the first embodiment, the total content ([MgO]+[CaO]) of MgO and CaO is 0.1% to 5.9%. In the glass according to the first embodiment, when [MgO]+[CaO] is 0.1% or more, the effects of improving the meltability, improving the moisture resistance, and preventing the increase in surface devitrification temperature are obtained.

In the glass according to the first embodiment, [MgO]+[CaO] is preferably 0.2% or more, more preferably 0.4% or more, still more preferably 0.6% or more, even more preferably 0.8% or more, even still more preferably 1% or more, yet still more preferably 1.2% or more, yet even more preferably 1.4% or more, yet even still more preferably 1.6% or more, yet even still more preferably 1.8% or more, yet even still more preferably 2% or more, yet even still more preferably 2.2% or more, and further yet even still more preferably 2.4% or more.

In the glass according to the first embodiment, when [MgO]+[CaO] is 5.9% or less, deterioration of the dielectric properties can be prevented. In the glass according to the first embodiment, [MgO]+[CaO] is preferably 5.8% or less, more preferably 5.6% or less, still more preferably 5.4% or less, even more preferably 5.2 or less, even still more preferably 5% or less, yet still more preferably 4.8% or less, yet even more preferably 4.6% or less, yet even still more preferably 4.4% or less, yet even still more preferably 4.2% or less, yet even still more preferably 4% or less, yet even still more preferably 3.8% or less, and further yet even still more preferably 3.6% or less.

In the glass according to the first embodiment, $[MgO]/([MgO]+[Al_2O_3])$ is 0 to 0.45.

In the glass according to the first embodiment, $[MgO]/([MgO]+[Al_2O_3])$ is preferably 0 or more, more preferably 0.01 or more, still more preferably 0.02 or more, even more preferably 0.03 or more, even still more preferably 0.04 or more, yet still more preferably 0.05 or more, yet even more preferably 0.06 or more, yet even still more preferably 0.07 or less, yet even still more preferably 0.08 or more, yet even still more preferably 0.09 or more, yet even still more preferably 0.1 or more, and further yet even still more preferably 0.11 or more.

In the glass according to the first embodiment, when $[MgO]/([MgO]+[Al_2O_3])$ is 0.45 or less, the increase in surface devitrification temperature can be prevented. In the glass according to the first embodiment, $[MgO]/([MgO]+[Al_2O_3])$ is preferably 0.45 or less, more preferably 0.44 or less, still more preferably 0.43 or less, even more preferably 0.42 or less, even still more preferably 0.41 or less, yet still more preferably 0.4 or less, yet even more preferably 0.39 or less, yet even still more preferably 0.35 or less, yet even still more preferably 0.31 or less, yet even still more preferably 0.3 or less, yet even still more preferably 0.25 or less, and further yet even still more preferably 0.2 or less.

$B_2O_3$ is a component that reduces the dielectric loss tangent in the high frequency region. The glass according to the first embodiment preferably contains 15% to 30% of $B_2O_3$. In the glass according to the first embodiment, when the content of $B_2O_3$ is 15% or more, the meltability is improved. In addition, the dielectric loss tangent in the high frequency region can be reduced. The content of $B_2O_3$ is more preferably 16% or more, still more preferably 16.5% or more, even more preferably 17% or more, even still more preferably 17.5% or more, and yet still more preferably 18% or more.

In the glass according to the first embodiment, when the content of $B_2O_3$ is 30% or less, the chemical resistance can be improved. The content of $B_2O_3$ is more preferably 29% or less, still more preferably 28% or less, even more preferably 27% or less, even still more preferably 26% or less, and yet still more preferably 25% or less.

CaO is a component that has a property of increasing a specific elastic modulus next to MgO among alkaline earth metals and not excessively decreasing a strain point, and that improves the meltability. Further, CaO is a component also having a property that it is less likely to deteriorate the moisture resistance and is less likely to increase the surface devitrification temperature than MgO. The glass according to the first embodiment may contain CaO. In the glass according to the first embodiment, when CaO is contained, the average thermal expansion coefficient is not excessively increased, and the increase in surface devitrification temperature can be prevented. In the glass according to the first embodiment, in the case where CaO is contained, the content of CaO is preferably 0.1% or more, more preferably 0.2% or more, still more preferably 0.3% or more, even more preferably 0.4% or more, even still more preferably 0.5% or more, and yet still more preferably 0.6% or more.

In the glass according to the first embodiment, the content of CaO is preferably 4% or less, more preferably 3.8% or less, still more preferably 3.6% or less, even more preferably 3.4% or less, even still more preferably 3.2% or less, and yet still more preferably 3% or less, from the viewpoint of not excessively increasing the average thermal expansion coefficient and preventing the increase in surface devitrification temperature.

MgO is a component that increases the Young's modulus without increasing the specific gravity. That is, MgO is a component that increases the specific elastic modulus, which can reduce a deflection problem, increase a fracture toughness value, and improve strength of the glass. In addition, MgO is also a component that improves the meltability. Therefore, the glass according to the first embodiment may contain MgO.

In the glass according to the first embodiment, in the case where MgO is contained, the content of MgO is preferably 0.1% or more, more preferably 0.2% or more, still more preferably 0.3% or more, even more preferably 0.4% or more, even still more preferably 0.5% or more, and yet still more preferably 0.6% or more. In the glass according to the first embodiment, the content of MgO is preferably 4% or less, more preferably 3.8% or less, still more preferably 3.6% or less, even more preferably 3.4% or less, even still more preferably 3.2% or less, and yet still more preferably 3% or less, from the viewpoint of preventing the increase in surface devitrification temperature.

BaO is a component that improves the moisture resistance of the glass, that does not increase the surface devitrification temperature of the glass, and that improves the meltability of the glass. It also has the effect of increasing the average thermal expansion coefficient. Therefore, the glass according to the first embodiment may contain BaO. In the glass according to the first embodiment, in the case where BaO is contained, the content of BaO is preferably 0.1% or more, more preferably 0.2% or more, still more preferably 0.3% or more, even more preferably 0.4% or more, even still more preferably 0.5% or more, and yet still more preferably 0.6% or more.

In the glass according to the first embodiment, when a large amount of BaO is contained, the specific gravity increases and the Young's modulus tends to decrease. In addition, the chemical resistance of the glass decreases. Therefore, in the glass according to the first embodiment, the content of BaO is preferably 4% or less, more preferably 3.8% or less, still more preferably 3.6% or less, even more preferably 3.4% or less, even still more preferably 3.2% or less, and yet still more preferably 3% or less.

$Li_2O$ is a component that improves the moisture resistance and the meltability. It also has the effect of preventing the increase in surface devitrification temperature and increasing the average thermal expansion coefficient. The glass according to the first embodiment may contain $Li_2O$. In the glass according to the first embodiment, in the case where $Li_2O$ is contained, the content of $Li_2O$ is preferably 0.1% or more. When 0.01% or more of $Li_2O$ is contained, the meltability is improved. In the glass according to the first embodiment, the content of $Li_2O$ is more preferably 0.03% or more, still more preferably 0.05% or more, even more preferably 0.07% or more, even still more preferably 0.09% or more, and yet still more preferably 0.1% or more.

In the glass according to the first embodiment, the content of $Li_2O$ is preferably 0.8% or less, more preferably 0.7% or less, still more preferably 0.6% or less, even more preferably 0.5% or less, even still more preferably 0.4% or less, and yet still more preferably 0.3% or less, from the viewpoint of the dielectric properties.

$K_2O$ is a component that improves the moisture resistance and the meltability. It also has the effect of preventing the increase in surface devitrification temperature and increasing the average thermal expansion coefficient. The glass according to the first embodiment may contain $K_2O$. In the glass according to the first embodiment, when $K_2O$ is contained, the meltability and the phase separation stability are improved. In the glass according to the first embodiment, in the case where $K_2O$ is contained, the content of $K_2O$ is preferably 0.01% or more, more preferably 0.03% or more, still more preferably 0.05% or more, even more preferably 0.07% or more, even still more preferably 0.09% or more, and yet still more preferably 0.1% or more.

In the glass according to the first embodiment, the content of $K_2O$ is preferably 0.5% or less, more preferably 0.4% or less, still more preferably 0.3% or less, even more preferably 0.25% or less, even still more preferably 0.2% or less, and yet still more preferably 0.15% or less, from the viewpoint of the dielectric properties.

$Na_2O$ is a component that improves the moisture resistance and the meltability. It also has the effect of preventing the increase in surface devitrification temperature and increasing the average thermal expansion coefficient. Therefore, the glass according to the first embodiment may contain $Na_2O$. In the glass according to the first embodiment, when $Na_2O$ is contained, the meltability is improved. In the glass according to the first embodiment, the content of $Na_2O$ is more preferably 0.01% or more, still more preferably 0.03% or more, even more preferably 0.05% or more, even still more preferably 0.07% or more, yet still more preferably 0.09% or more, and most preferably 0.1% or more.

In the glass according to the first embodiment, the content of $Na_2O$ is preferably 0.7% or less, more preferably 0.6% or less, still more preferably 0.5% or less, even more preferably 0.4% or less, even still more preferably 0.3% or less, and yet still more preferably 0.2% or less, from the viewpoint of the dielectric properties.

Cl is a component that improves the dielectric properties. It also serves as a refining agent, and has the effect of reducing bubbles in a glass melt. The glass according to the first embodiment preferably contains 0.01% to 1% of Cl. In the glass according to the first embodiment, when 0.01% or more of Cl is contained, the Abs-OH in the glass can be reduced, and as the Abs-OH is reduced, the relative dielectric constant and the dielectric loss tangent can be reduced, thereby improving the dielectric properties.

In the glass according to the first embodiment, the content of Cl is more preferably 0.01% or more, still more preferably 0.02% or more, even more preferably 0.03% or more, even still more preferably 0.04% or more, and yet still more preferably 0.05% or more. In the glass according to the first embodiment, the content of Cl is more preferably 1% or less, still more preferably 0.9% or less, even more preferably 0.8% or less, even still more preferably 0.7% or less, and particularly preferably 0.6% or less.

In the glass according to the first embodiment, the total content ([SrO]+[BaO]) of SrO and BaO is preferably 0.1% to 5.9%. In the glass according to the first embodiment, when ([SrO]+[BaO]) is 0.1% or more, the moisture resistance can be improved. It also has the effects of improving the meltability, preventing the increase in surface devitrification temperature, and increasing the average thermal expansion coefficient. In the glass according to the first embodiment, ([SrO]+[BaO]) is more preferably 0.1% or more, and is preferably 0.2% or more, 0.3% or more, 0.4% or more, 0.5% or more, 0.6% or more, 0.7% or more, 0.8% or more, 0.9% or more, 1% or more, 1.1% or more, 1.2% or more, 1.3% or more, 1.4% or more, 1.5% or more, 1.6% or more, 1.7% or more, 1.8% or more, and 1.9% or more in a preferred order.

In the glass according to the first embodiment, when ([SrO]+[BaO]) is 5.9% or less, the deterioration of the chemical resistance can be prevented. In the glass according to the first embodiment, ([SrO]+[BaO]) is more preferably 5.9% or less, and is preferably 5.8% or less, 5.7% or less, 5.6% or less, 5.5% or less, 5.4% or less, 5.3% or less, 5.2% or less, 5.1% or less, 5% or less, 4.9% or less, 4.8% or less, 4.7% or less, and 4.6% or less in a preferred order.

In the glass according to the first embodiment, ([MgO]+[CaO])-([SrO]+[BaO]) is preferably -3% to 3%. In the glass according to the first embodiment, when ([MgO]+[CaO])-([SrO]+[BaO]) is -3% or more, the deterioration of the chemical resistance can be prevented. In the glass according to the first embodiment, ([MgO]+[CaO])-([SrO]+[BaO]) is more preferably -3% or more, and is preferably -2.9% or more, -2.8% or more, -2.7% or more, - 2.6% or more, -2.5% or more, -2.4% or more, -2.3% or more, -2.2% or more, -2.1% or more, -2%, -1.9% or more, - 1.8% or more, -1.7% or more, -1.6% or more, -1.5% or more, -1.4% or more, -1.3% or more, -1.2% or more, -1.1% or more, and -1% or more in a preferred order.

In the glass according to the first embodiment, when ([MgO]+[CaO])-([SrO]+[BaO]) is 3% or less, the moisture resistance can be improved. In the glass according to the first embodiment, ([MgO]+[CaO])-([SrO]+[BaO]) is more preferably 3% or less, and is preferably 2.9% or less, 2.8% or less, 2.7% or less, 2.6% or less, 2.5% or less, 2.4% or less, 2.3% or less, 2.2% or less, 2.1% or less, and 2% or less in a preferred order.

[Glass According to Second Embodiment]

In addition to the above common configurations, the glass according to the second embodiment has the following configuration particularly from the viewpoint of further improving the meltability, the chemical resistance, the moisture resistance, the phase separation stability, and the dielectric properties, and preventing the increase in surface devitrification temperature.

It contains, in mol% in terms of oxides,

0.1% to 6% of CaO, in which
a total content (RO) of MgO, CaO, SrO, and BaO is more than 0% to 6%,
a total content ($R_2O$) of $Li_2O$, $Na_2O$, and $K_2O$ is 0% to 1%,
[$Al_2O_3$]-[RO] is -3% to less than 8%,
[$Al_2O_3$]$\times$[RO] is more than 0 to 28, and
(([MgO]+[CaO])-([SrO]+[BaO]))/[$Al_2O_3$] is -3.0 to 0.60.

The glass according to the second embodiment contains 0.1% to 6% of CaO. In the glass according to the second embodiment, when the content of CaO is 0.1% or more, the average thermal expansion coefficient is not excessively increased, and the increase in surface devitrification temperature can be prevented. In the glass according to the second embodiment, the content of CaO is preferably 0.15% or more, more preferably 0.2% or more, still more preferably 0.25% or more, even more preferably 0.3% or more, even still more preferably 0.35% or more, yet still more preferably 0.4% or more, yet even more preferably 0.5% or more, yet even still more preferably 0.6% or more, yet even still more preferably 0.7% or more, yet even still more preferably 0.8% or more, yet even still more preferably 0.9% or more, and further yet even still more preferably 1% or more.

In the glass according to the second embodiment, when the content of CaO is 6% or less, the average thermal expansion coefficient is not excessively increased, and the increase in surface devitrification temperature can be prevented. In the glass according to the second embodiment, the content of CaO is preferably 5.8% or less, more preferably 5.6% or less, still more preferably 5.4% or less, even more preferably 5.2% or less, even still more preferably 5% or less, yet still more preferably 4.8% or less, yet even more preferably 4.6% or less, yet even still more preferably 4.4% or less, yet even still more preferably 4.2% or less, yet even still more preferably 4% or less, yet even still more preferably 3.8% or less, and further yet even still more preferably 3.6% or less.

In the glass according to the second embodiment, regarding RO and $R_2O$, these are the same as those of the glass according to the first embodiment.

In the glass according to the second embodiment, regarding $[Al_2O_3]$-[RO], it is the same as that of the glass according to the first embodiment.

In the glass according to the second embodiment, $[Al_2O_3]\times[RO]$ is more than 0 to 28. In the glass according to the second embodiment, when $[Al_2O_3]\times[RO]$ is more than 0, the phase separation stability can be improved. In the glass according to the second embodiment, $[Al_2O_3]\times[RO]$ is preferably 1 or more, more preferably 2 or more, still more preferably 3 or more, even more preferably 3.5 or more, even still more preferably 4 or more, yet still more preferably 4.5 or more, yet even more preferably 5 or more, yet even still more preferably 5.5 or more, yet even still more preferably 6 or more, yet even still more preferably 6.5 or more, yet even still more preferably 7 or more, and further yet even still more preferably 7.5 or more.

In the glass according to the second embodiment, when $[Al_2O_3]\times[RO]$ is 28 or less, the dielectric properties can be improved. In the glass according to the second embodiment, $[Al_2O_3]\times[RO]$ is preferably 27 or less, more preferably 26 or less, still more preferably 25 or less, even more preferably 24 or less, even still more preferably 23.5 or less, yet still more preferably 23 or less, yet even more preferably 22.5 or less, yet even still more preferably 22 or less, yet even still more preferably 21.5 or less, yet even still more preferably 21 or less, yet even still more preferably 20.5 or less, and further yet even still more preferably 20 or less.

In the glass according to the second embodiment, $(([MgO]+[CaO])-([SrO]+[BaO]))/[Al_2O_3]$ is -3.0 to 0.60. In the glass according to the second embodiment, when $(([MgO]+[CaO])-([SrO]+[BaO]))/[Al_2O_3]$ is -3.0 or more, the chemical resistance can be improved.

In the glass according to the second embodiment, $(([MgO]+[CaO])-([SrO]+[BaO]))/[Al_2O_3]$ is preferably -2.5 or more, more preferably -2.0 or more, still more preferably -1.9 or more, even more preferably -1.8 or more, even still more preferably -1.7 or more, yet still more preferably -1.6 or more, yet even more preferably -1.5 or more, yet even still more preferably -1.4 or more, yet even still more preferably -1.3 or more, yet even still more preferably -1.2 or more, yet even still more preferably -1.1 or more, and further yet even still more preferably -1.0 or more.

In the glass according to the second embodiment, when $(([MgO]+[CaO])-([SrO]+[BaO]))/[Al_2O_3]$ is 0.60 or less, the moisture resistance can be improved. In the glass according to the second embodiment, $(([MgO]+[CaO])-([SrO]+[BaO]))/[Al_2O_3]$ is preferably 0.59 or less, more preferably 0.58 or less, still more preferably 0.57 or less, even more preferably 0.56 or less, even still more preferably 0.55 or less, yet still more preferably 0.54 or less, yet even more preferably 0.53 or less, yet even still more preferably 0.52% or less, yet even still more preferably 0.51% or less, and further yet even still more preferably 0.50% or less.

In the glass according to the second embodiment, regarding $B_2O_3$, MgO, BaO, $Li_2O$, $K_2O$, and $Na_2O$, Cl, the total contents ([SrO]+[BaO]) of SrO, and BaO, and ([MgO]+[CaO])-([SrO]+[BaO]), these are the same as those of the glass according to the first embodiment.

The glass according to the second embodiment may contain SrO. In the glass according to the second embodiment, when SrO is contained, the moisture resistance and the meltability are improved. In the glass according to the second embodiment, in the case where SrO is contained, the content thereof is preferably 0.1% or more, more preferably 0.2% or more, still more preferably 0.3% or more, even more preferably 0.4% or more, even still more preferably 0.5% or more, and yet still more preferably 0.6% or more.

In the glass according to the second embodiment, the content of SrO is preferably 5.9% or less, more preferably 5.5% or less, still more preferably 5% or less, even more preferably 4.5% or less, even still more preferably 4% or less, and yet still more preferably 3.5% or less, from the viewpoint of preventing the deterioration of the chemical resistance, and further preventing the average thermal expansion coefficient being excessively increased without excessively increasing the specific gravity.

[Glass According to Third Embodiment]

In addition to the above common configurations, the glass according to the third embodiment has the following configuration particularly from the viewpoint of further improving the meltability, the moisture resistance, the phase separation stability, and the dielectric properties.
It contains, in mol% in terms of oxides,

more than 0% of $Li_2O$, and
more than 0% to 0.8% of $K_2O$, in which
a total content (RO) of MgO, CaO, SrO, and BaO is 0% to 0.5%,
a total content ($R_2O$) of $Li_2O$, $Na_2O$, and $K_2O$ is more than 0% to 4%,
$[Al_2O_3]\times[R_2O]$ is more than 0 to 1.40, and
$[Na_2O]/[R_2O]$ is 0.30 to 0.99.

The glass according to the third embodiment contains more than 0% of $Li_2O$. In the glass according to the third embodiment, when more than 0% of $Li_2O$ is contained, the meltability and the moisture resistance can be improved. In the glass according to the third embodiment, the content of $Li_2O$ is preferably 0.1% or more, more preferably 0.2% or more, still more preferably 0.3% or more, even more preferably 0.4% or more, even still more preferably 0.5% or more, yet still more preferably 0.6% or more, yet even more preferably 0.7% or more, yet even still more preferably 0.8% or more, yet even still more preferably 0.9% or more, yet even still more preferably 1.0% or more, yet even still more preferably 1.1% or more, and further yet even still more preferably 1.2% or more.
In the glass according to the third embodiment, the content of $Li_2O$ is preferably 2.8% or less. In the glass according to the third embodiment, when the content of $Li_2O$ is 2.8% or less, the deterioration of the dielectric properties can be prevented. In the glass according to the third embodiment, the content of $Li_2O$ is more preferably 2.7% or less, still more preferably 2.6% or less, even more preferably 2.5% or less, even still more preferably 2.4% or less, yet still more preferably 2.3% or less, yet even more preferably 2.2% or less, yet even still more preferably 2.1% or less, yet even still more preferably 2% or less, yet even still more preferably 1.9% or less, yet even still more preferably 1.8% or less, and further yet even still more preferably 1.7% or less.
The glass according to the third embodiment contains more than 0% to 0.8% of $K_2O$. In the glass according to the third embodiment, when the content of $K_2O$ is more than 0%, the meltability and the moisture resistance can be improved. In the glass according to the third embodiment, the content of $K_2O$ is preferably 0.02% or more, more preferably 0.04% or more, still more preferably 0.06% or more, even more preferably 0.08% or more, even still more preferably 0.1% or more, yet still more preferably 0.12% or more, yet even more preferably 0.14% or more, yet even still more preferably 0.16% or more, yet even still more preferably 0.18% or more, yet even still more preferably 0.20% or more, and further yet even still more preferably 0.22% or more.
In the glass according to the third embodiment, when the content of $K_2O$ is 0.8% or less, the deterioration of the dielectric properties can be prevented. In the glass according to the third embodiment, the content of $K_2O$ is preferably 0.77% or less, more preferably 0.74% or less, still more preferably 0.71% or less, even more preferably 0.68% or less, even still more preferably 0.65% or less, yet still more preferably 0.62% or less, yet even more preferably 0.59% or less, yet even still more preferably 0.56% or less, yet even still more preferably 0.53% or less, yet even still more preferably 0.50% or less, yet even still more preferably 0.47% or less, and further yet even still more preferably 0.44% or less.
In the glass according to the third embodiment, RO is 0% to 0.5%. The glass according to the third embodiment may contain at least one selected from MgO, CaO, SrO, and BaO. In the glass according to the third embodiment, when at least one selected from MgO, CaO, SrO, and BaO is contained, the moisture resistance can be improved. In the glass according to the third embodiment, in the case where at least one selected from MgO, CaO, SrO, and BaO is contained, RO is preferably 0.02% or more, more preferably 0.04% or more, still more preferably 0.06% or more, and even more preferably 0.08% or more.
In the glass according to the third embodiment, when RO is 0.5% or less, deterioration of the phase separation stability can be prevented. In the glass according to the third embodiment, RO is preferably 0.45% or less, more preferably 0.4% or less, still more preferably 0.35% or less, even more preferably 0.3% or less, even still more preferably 0.25% or less, and yet still more preferably 0.2% or less.
In the glass according to the third embodiment, $R_2O$ is more than 0% to 4%. In the glass according to the third embodiment, when $R_2O$ is more than 0%, the meltability is improved. In the glass according to the third embodiment, $R_2O$ is preferably 0.1% or more, and is preferably 0.2% or more, 0.3% or more, 0.4% or more, 0.5% or more, 0.6% or more, 0.7% or more, 0.8% or more, 0.9% or more, 1.0% or more, 1.1% or more, 1.2% or more, 1.3% or more, 1.4% or more, 1.5% or more, 1.6% or more, 1.7% or more, 1.8% or more, 1.9% or more, and 2.0% or more in a preferred order.
In the glass according to the third embodiment, when $R_2O$ is 4% or less, the deterioration of the dielectric properties can be prevented. In the glass according to the third embodiment, $R_2O$ is preferably 3.9% or less, and is preferably 3.8% or less, 3.7% or less, 3.6% or less, 3.5% or less, 3.4% or less, 3.3% or less, 3.2% or less, 3.1% or less, 3.0% or less, 2.9% or less, 2.8% or less, 2.7% or less, 2.6% or less, 2.5% or less in a preferred order.

In the glass according to the third embodiment, $[Al_2O_3]\times[R_2O]$ is more than 0 to 1.40. In the glass according to the third embodiment, when $[Al_2O_3]\times[R_2O]$ is more than 0, the phase separation stability can be improved. In the glass according to the third embodiment, $[Al_2O_3]\times[R_2O]$ is preferably 0.05 or more, more preferably 0.1 or more, still more preferably 0.15 or more, even more preferably 0.20 or more, even still more preferably 0.25 or more, yet still more preferably 0.30 or more, yet even more preferably 0.35 or more, yet even still more preferably 0.40 or more, yet even still more preferably 0.45 or more, yet even still more preferably 0.50 or more, yet even still more preferably 0.55 or more, and further yet even still more preferably 0.60 or more.

In the glass according to the third embodiment, when $[Al_2O_3]\times[R_2O]$ is 1.40 or less, the deterioration of the dielectric properties can be prevented. In the glass according to the third embodiment, $[Al_2O_3]\times[R_2O]$ is preferably 1.40 or less, and is preferably 1.39 or less, 1.38 or less, 1.37 or less, 1.36 or less, 1.35 or less, 1.34 or less, 1.33 or less, 1.32 or less, 1.31 or less, 1.30 or less, 1.29 or less, 1.28 or less, 1.27 or less, 1.26 or less, 1.25 or less, 1.24 or less, 1.23 or less, 1.22 or less, 1.21 or less, 1.20 or less, 1.19 or less, 1.18 or less, 1.17 or less, 1.16 or less, 1.15 or less, 1.14 or less, 1.13 or less, 1.12 or less, 1.11 or less, 1.10 or less, 1.09 or less, 1.08 or less, 1.07 or less, 1.06 or less, 1.05 or less, 1.04 or less, 1.03 or less, 1.02 or less, 1.01 or less, and 1.00 or less in a preferred order.

In the glass according to the third embodiment, $[Na_2O]/[R_2O]$ is 0.30 to 0.99. In the glass according to the third embodiment, when $[Na_2O]/[R_2O]$ is 0.30 or more, the dielectric properties are improved owing to an alkali mixing effect. In the glass according to the third embodiment, $[Na_2O]/[R_2O]$ is preferably 0.30 or more, more preferably 0.31 or more, still more preferably 0.32 or more, even more preferably 0.33 or more, even still more preferably 0.34 or more, yet still more preferably 0.35 or more, yet even more preferably 0.36 or more, yet even still more preferably 0.37% or more, yet even still more preferably 0.38 or more, yet even still more preferably 0.39 or more, yet even still more preferably 0.40 or more, and further yet even still more preferably 0.41 or more.

In the glass according to the third embodiment, when $[Na_2O]/[R_2O]$ is 0.99 or less, the dielectric properties are improved owing to the alkali mixing effect. In the glass according to the third embodiment, $[Na_2O]/[R_2O]$ is preferably 0.95 or less, more preferably 0.90 or less, still more preferably 0.85 or less, even more preferably 0.80 or less, even still more preferably 0.75 or less, yet still more preferably 0.70 or less, yet even more preferably 0.68 or less, yet even still more preferably 0.66 or less, yet even still more preferably 0.64 or less, yet even still more preferably 0.62 or less, yet even still more preferably 0.60 or less, and further yet even still more preferably 0.58 or less.

In the glass according to the third embodiment, regarding Cl, it is the same as that of the glass according to the first embodiment.

The glass according to the third embodiment preferably contains 18% to 29% of $B_2O_3$. In the glass according to the third embodiment, when the content of $B_2O_3$ is 18% or more, the meltability is improved. In addition, the dielectric loss tangent in the high frequency region can be reduced. The content of $B_2O_3$ is more preferably 18.5% or more, even more preferably 19% or more, still more preferably 19.5% or more, still even more preferably 20% or more, yet still even more preferably 20.5% or more, and most preferably 21% or more.

In the glass according to the third embodiment, when the content of $B_2O_3$ is 29% or less, the chemical resistance can be improved. The content of $B_2O_3$ is more preferably 28% or less, still more preferably 27% or less, even more preferably 26% or less, even still more preferably 25% or less, and yet still more preferably 24% or less.

The glass according to the third embodiment may contain SrO. SrO is a component having the effects of improving the moisture resistance and preventing an increase in devitrification temperature. It also has the effect of increasing the average thermal expansion coefficient. In the glass according to the third embodiment, in the case where SrO is contained, the content thereof is preferably 0.01% or more, more preferably 0.02% or more, and still more preferably 0.03% or more.

In the glass according to the third embodiment, the content of SrO is preferably 0.5% or less, and is preferably 0.45% or less, 0.4% or less, 0.3% or less, 0.2% or less, 0.1% or less, and 0.05% or less in a preferred order, from the viewpoint of the dielectric properties and the chemical resistance.

The glass according to the third embodiment may contain CaO. CaO is a component having the effects of improving the meltability and preventing the increase in devitrification temperature. In the glass according to the third embodiment, in the case where CaO is contained, the content thereof is preferably 0.01% or more, more preferably 0.02% or more, and still more preferably 0.03% or more.

In the glass according to the third embodiment, the content of CaO is preferably 0.5% or less, and is preferably 0.45% or less, 0.4% or less, 0.3% or less, 0.2% or less, 0.1% or less, and 0.05% or less in a preferred order, from the viewpoint of the dielectric properties and the phase separation stability.

The glass according to the third embodiment may contain MgO. MgO is a component that increases the Young's modulus without increasing the specific gravity. In the glass according to the third embodiment, in the case where MgO is contained, the content thereof is preferably 0.01% or more, more preferably 0.02% or more, and still more preferably 0.03% or more.

In the glass according to the third embodiment, the content of MgO is preferably 0.5% or less, and is preferably 0.45% or less, 0.4% or less, 0.3% or less, 0.2% or less, 0.1% or less, and 0.05% or less in a preferred order, from the viewpoint of the dielectric properties and the phase separation stability.

The glass according to the third embodiment may contain BaO. BaO is a component having the effects of improving the moisture resistance and preventing the increase in devitrification temperature. It also has the effect of increasing the average thermal expansion coefficient. In the glass according to the third embodiment, in the case where BaO is contained, the content thereof is preferably 0.01% or more, more preferably 0.02% or more, and still more preferably 0.03% or more.

In the glass according to the third embodiment, the content of BaO is preferably 0.5% or less, and is preferably 0.45% or less, 0.4% or less, 0.3% or less, 0.2% or less, 0.1% or less, and 0.05% or less in a preferred order, from the viewpoint of the dielectric properties and the chemical resistance.

In the glass according to the third embodiment, $Na_2O$ is a component having the effect of improving the meltability and the moisture resistance. The glass according to the third embodiment preferably contains more than 0% to 3.9% of $Na_2O$. When the content of $Na_2O$ is more than 0%, the meltability is improved. The content of $Na_2O$ is more preferably 0.1% or more, and is preferably 0.2% or more, 0.3% or more, 0.4% or more, 0.5% or more, 0.6% or more, 0.7% or more, 0.8% or more, 0.9% or more, 1% or more, 1.1% or more, and 1.2% or more in a preferred order.

In the glass according to the third embodiment, the content of $Na_2O$ is preferably 3.9% or less, from the viewpoint of the dielectric properties. The content of $Na_2O$ is more preferably 3.8% or less, and is preferably 3.7% or less, 3.6% or less, 3.5% or less, 3.4% or less, 3.3% or less, 3.2% or less, 3.1% or less, 3.0% or less, 2.9% or less, 2.8% or less, 2.7% or less, 2.6% or less, 2.5% or less, 2.4% or less, 2.3% or less, 2.2% or less, 2.1% or less, 2.0%, 1.9% or less, 1.8% or less, and 1.7 or less in a preferred order.

In the glass according to the third embodiment, $[Al_2O_3]\times[RO]$ is preferably 0 to 0.4. $[Al_2O_3]\times[RO]$ is more preferably 0.35 or less, and is preferably 0.30 or less, 0.25 or less, 0.20 or less, 0.15 or less, and 0.10 or less in a preferred order, from the viewpoint of the dielectric properties.

In the glass according to the third embodiment, the total content ([MgO]+[CaO]) of MgO and CaO is preferably 0% to 0.5%. In the glass according to the third embodiment, when [MgO]+[CaO] is 0.5% or less, the deterioration of the dielectric properties can be prevented. In the glass according to the third embodiment, [MgO]+[CaO] is more preferably 0.45% or less, and is preferably 0.40% or less, 0.35% or less, 0.30% or less, 0.25% or less, 0.20% or less, 0.15% or less, 0.10% or less, and 0.05% or less in a preferred order.

In the glass according to the third embodiment, the lower limit of [MgO]+[CaO] may be 0%. In the case of not being 0%, [MgO]+[CaO] is more preferably 0.001% or more, still more preferably 0.005% or more, and even more preferably 0.01% or more.

In the glass according to the third embodiment, the total content ([SrO]+[BaO]) of SrO and BaO is preferably 0% to 0.5%. When ([SrO]+[BaO]) is 0.5% or less, the deterioration of the dielectric properties can be prevented. In the glass according to the third embodiment, ([SrO]+[BaO]) is more preferably 0.45% or less, and is preferably 0.40% or less, 0.35% or less, 0.30% or less, 0.25% or less, 0.20% or less, 0.15% or less, 0.10% or less, and 0.05% or less in a preferred order.

In the glass according to the third embodiment, the lower limit of [SrO]+[BaO] may be 0%. In the case of not being 0%, [SrO]+[BaO] is more preferably 0.001% or more, still more preferably 0.005% or more, and even more preferably 0.01% or more.

In the glass according to the third embodiment, ([MgO]+[CaO])-([SrO]+[BaO]) is preferably -0.5% to 0.5%. In the glass according to the third embodiment, when ([MgO]+[CaO])-([SrO]+[BaO]) is -0.5% or more, the deterioration of the chemical resistance can be prevented. In the glass according to the third embodiment, ([MgO]+[CaO])-([SrO]+[BaO]) is more preferably -0.4% or more, and is preferably -0.3% or more, -0.2% or more, and -0.1% or more in a preferred order.

In the glass according to the third embodiment, when ([MgO]+[CaO])-([SrO]+[BaO]) is 0.5% or less, the moisture resistance can be improved. In the glass according to the first embodiment, ([MgO]+[CaO])-([SrO]+[BaO]) is more preferably 0.4% or less, and is preferably 0.3% or less, 0.2% or less, and 0.1% or less in a preferred order.

In the glass according to the third embodiment, $[MgO]/([MgO]+[Al_2O_3])$ is preferably 0 to 0.45. In the glass according to the third embodiment, when $[MgO]/([MgO]+[Al_2O_3])$ is 0.45 or less, the increase in surface devitrification temperature can be prevented. In the glass according to the first embodiment, $[MgO]/([MgO]+[Al_2O_3])$ is more preferably 0.44 or less, still more preferably 0.43 or less, even more preferably 0.42 or less, even still more preferably 0.41 or less, yet still more preferably 0.4 or less, yet even more preferably 0.39 or less, yet even still more preferably 0.35 or less, yet even still more preferably 0.31 or less, yet even still more preferably 0.3 or less, yet even still more preferably 0.25 or less, and further yet even still more preferably 0.2 or less.

In the glass according to the third embodiment, $[MgO]/([MgO]+[Al_2O_3])$ may be 0. In the case of not being 0, $[MgO]/([MgO]+[Al_2O_3])$ is more preferably 0.001 or more, still more preferably 0.005 or more, and even more preferably 0.01 or more.

Hereinafter, other components and properties of the glass according to the present invention including the first to third embodiments will be described.

[Other Components and Properties]

The glass according to the present invention may contain $SO_3$ in order to improve a refining property of the glass. In the glass according to the present invention, in the case where the content of $SO_3$ is contained, the content of $SO_3$ is preferably 0.0001% or more, more preferably 0.0005% or more, and still more preferably 0.001% or more, in mass% in terms of oxides. In addition, the content of $SO_3$ is preferably 1% or less, more preferably 0.5% or less, and still more preferably 0.1% or less.

The glass according to the present invention may contain Fe in order to improve the meltability of the glass. However, from the viewpoint of coloring of the glass, a decrease in transmittance in a visible region, and a decrease in relative dielectric constant and dielectric loss tangent in the high frequency region, the content of Fe is preferably 0.15% or less, more preferably 0.1% or less, still more preferably 0.05% or less, and even more preferably 0.03% or less, in mass% in terms of oxides in terms of $Fe_2O_3$. In addition, in the glass according to the present invention, in the case where Fe is contained, the content of Fe is preferably 0.0001% or more, more preferably 0.0005% or more, and still more preferably 0.001% or more.

In the glass according to the present invention, the Abs-OH is preferably 0.1 to 10. The Abs-OH is an index of a water content in the glass, and is determined by mirror-polishing both surfaces of a glass sample to obtain a glass sheet having a thickness of 0.45 mm to 0.75 mm, and then measuring the transmittance using FT-IR in a wave number range of 4000 $cm^{-1}$ to 2000 $cm^{-1}$. The Abs-OH is determined according to the following equation, with $\tau_1$ (%) being the transmittance at a reference wave number of 3846 $cm^{-1}$, and $\tau_2$ (%) being a minimum transmittance at a wave number of 3700 $cm^{-1}$ to 3200 $cm^{-1}$, which is an absorption band derived from a hydroxy group.

$$\text{Abs-OH} = \log_{10}(\tau_2/100)/\log_{10}(\tau_1/100)$$

When the Abs-OH is 0.1 or more, a resistance value at a temperature $T_2$ at which a glass viscosity is $10^2$ dPa·s is reduced, which is suitable for melting the glass by electrical heating and has few bubble defects in the glass. Therefore, when the Abs-OH is 0.1 or more, the meltability is improved. When the Abs-OH is 10 or less, the bubble defects in the glass can be prevented. The Abs-OH is more preferably 9.0 or less, still more preferably 8.0 or less, and even more preferably 7.0 or less. The Abs-OH is more preferably 0.5 or more, still more preferably 1.0 or more, even more preferably 1.5 or more, even still more preferably 2.0 or more, and particularly preferably 2.5 or more.

Examples of an index of the water content in the glass that is not easily influenced by the transmittance $\tau_1$ (%) at the reference wave number 3846 $cm^{-1}$ further include ($Abs_{\beta\text{-}OH}$-$Abs_{Base}$) when $Abs_{Base} = -\log_{10}(\tau_1/100)$ and $Abs_{\beta\text{-}OH} = -\log_{10}(\tau_2/100)$. In the glass according to the present invention, the ($Abs_{\beta\text{-}OH}$-$Abs_{Base}$) is preferably 0.02 or more.

When the ($Abs_{\beta\text{-}OH}$-$Abs_{Base}$) is 0.02 or more, the resistance value at the temperature $T_2$ at which the glass viscosity is $10^2$ dPa·s is reduced, which is suitable for melting the glass by electrical heating and has few bubble defects in the glass. Therefore, the ($Abs_{\beta\text{-}OH}$-$Abs_{Base}$) is preferably 0.02 or more since the meltability is improved. When the ($Abs_{\beta\text{-}OH}$-$Abs_{Base}$) is 0.5 or less, the bubble defects in the glass can be prevented. The ($Abs_{\beta\text{-}OH}$-$Abs_{Base}$) is more preferably 0.4 or less, still more preferably 0.35 or less, even more preferably 0.3 or less, and particularly preferably 0.25 or less. The ($Abs_{\beta\text{-}OH}$-$Abs_{Base}$) is more preferably 0.03 or more, still more preferably 0.05 or more, even more preferably 0.1 or more, even still more preferably 0.125 or more, yet still more preferably 0.15 or more, and particularly preferably 0.175 or more.

The glass according to the present invention may contain $SnO_2$ in order to improve the refining property of the glass. The content of $SO_3$ is preferably 0.001% or more, more preferably 0.01% or more, and still more preferably 0.1% or more. In addition, in the glass according to the present invention, the content of $SnO_2$ is preferably 1% or less, more preferably 0.5% or less, and still more preferably 0.2% or less, from the viewpoint of the dielectric properties

In order to improve the chemical resistance of the glass, the glass according to the present invention may contain, as a trace component, at least one selected from the group consisting of $Sc_2O_3$, $TiO_2$, ZnO, $Ga_2O_3$, $GeO_2$, $Y_2O_3$, $ZrO_2$, $Nb_2O_5$, $In_2O_3$, $TeO_2$, $HfO_2$, $Ta_2O_5$, $WO_3$, $Bi_2O_3$, $La_2O_3$, $Gd_2O_3$, $Yb_2O_3$, and $Lu_2O_3$. However, when the content of the trace component is too large, the phase separation stability of the glass tends to decrease, and the total content of the trace component is preferably 1% or less, more preferably 0.25% or less, still more preferably 0.2% or less, even more preferably 0.1% or less, and even still more preferably 0.05% or less.

The glass according to the present invention may contain only one or two or more of the above trace components.

In order to improve the meltability and the like of the glass, the glass according to the present invention may contain $P_2O_5$. The content of $P_2O_5$ is preferably 2% or less, more preferably 1% or less, still more preferably 0.5% or less, even more preferably 0.3% or less, and even still more preferably 0.1% or less.

On the other hand, since $P_2O_5$ may volatilize in glass forming equipment, re-aggregate, and fall on the glass sheet to cause defects of foreign substances, the content of $P_2O_5$ is yet still more preferably 0.05% or less, yet even more preferably 0.01% or less, and yet even still more preferably 0.005% or less, and most preferably substantially no $P_2O_5$ is contained. In the present invention, "substantially no $P_2O_5$ is contained" means that $P_2O_5$ is not contained except for inevitable impurities mixed from raw materials and the like, that is, $P_2O_5$ is not intentionally contained.

The glass according to the present invention may contain F for the purpose of improving the meltability of the glass, lowering the strain point of the glass, lowering $T_g$, lowering an annealing point, reducing the dielectric loss tangent, and the like. The content of F is preferably 0.1 mol% or more, more preferably 0.2 mol% or more, and still more preferably 0.4 mol% or more. However, from the viewpoint of preventing a decrease in glass quality due to volatilization of F, the content of F is preferably 1.5 mol% or less, more preferably 1 mol% or less, still more preferably 0.5 mol% or less, and even more preferably 0.1 mol% or less.

The content of F is preferably 0.01% or more, and more preferably 0.03% or more in mass%. An upper limit is preferably 0.2% or less, more preferably 0.1% or less, and still more preferably 0.05% or less.

The glass according to the present invention may contain at least one selected from the group consisting of $Se_2O_3$, $TeO_2$, $Ga_2O_3$, $In_2O_3$, $GeO_2$, CdO, BeO, and $Bi_2O_3$ in order to improve the meltability, the refining property, formability, and the like of the glass, to obtain absorption at a specific wavelength, and to improve a density, hardness, bending rigidity, durability, and the like. The total content of these components is preferably 2% or less, more preferably 1% or less, still more preferably 0.5% or less, even more preferably 0.3% or less, even still more preferably 0.1% or less, yet still more preferably 0.05% or less, and yet even more preferably 0.01% or less.

The glass according to the present invention may contain a rare earth oxide or a transition metal oxide in order to improve the meltability, the refining property, the formability, and the like of the glass and to improve the hardness of the glass, such as the Young's modulus.

The glass according to the present invention may contain, as the rare earth oxide, at least one selected from the group consisting of $Sc_2O_3$, $Y_2O_3$, $La_2O_3$, $Ce_2O_3$, $Pr_2O_3$, $Nd_2O_3$, $Pm_2O_3$, $Sm_2O_3$, $Eu_2O_3$, $Gd_2O_3$, $Tb_2O_3$, $Dy_2O_3$, $Ho_2O_3$, $Er_2O_3$, $Tm_2O_3$, $Yb_2O_3$, and $Lu_2O_3$. The total content of these components is preferably 2% or less, more preferably 1% or less, still more preferably 0.5% or less, even more preferably 0.3% or less, even still more preferably 0.1% or less, yet still more preferably 0.05% or less, and yet even more preferably 0.01% or less.

The glass according to the present invention may contain, as the transition metal oxide, at least one selected from the group consisting of $V_2O_5$, $Ta_2O_3$, $Nb_2O_5$, $WO_3$, $MoO_3$, and $HfO_2$. The total content of these components is preferably 2% or less, more preferably 1% or less, still more preferably 0.5% or less, even more preferably 0.3% or less, even still more preferably 0.1% or less, yet still more preferably 0.05% or less, and yet even more preferably 0.01% or less.

In order to improve the meltability and the like of the glass, the glass according to the present invention may contain $ThO_2$, which is an actinide oxide. The content of $ThO_2$ is preferably 2% or less, more preferably 1% or less, still more preferably 0.5% or less, even more preferably 0.3% or less, even still more preferably 0.1% or less, yet still more preferably 0.05% or less, yet even more preferably 0.01% or less, and yet even still more preferably 0.005% or less.

In the glass according to the present invention, the dielectric loss tangent at 20°C and a frequency of 35 GHz is preferably 0.005 or less. When the dielectric loss tangent at 20°C and a frequency of 35 GHz is 0.005 or less, the dielectric loss can be reduced in a high frequency region at a frequency of more than 30 GHz. The dielectric loss tangent at 20°C and at a frequency of 35 GHz is preferably 0.0045 or less, more preferably 0.0040 or less, still more preferably 0.0035 or less, even more preferably 0.0030 or less, and even still more preferably 0.0025 or less. It is not particularly limited in lower limit, and is preferably, for example, 0.0001 or more.

In the glass according to the present invention, the relative dielectric constant at 20°C and 35 GHz is preferably 4.5 or less, more preferably 4.45 or less, still more preferably 4.4 or less, even more preferably 4.35 or less, and even still more preferably 4.3 or less. It is not particularly limited in lower limit, and is preferably, for example, 3 or more.

The glass according to the present invention preferably has a density of 2.58 $g/cm^3$ or less. Accordingly, a self-weight deflection is reduced, and handling of a large-sized substrate is facilitated. A weight of a device using the glass can be reduced. The density is more preferably 2.5 $g/cm^3$ or less, still more preferably 2.4 $g/cm^3$ or less, even more preferably 2.35 $g/cm^3$ or less, and even still more preferably 2.3 $g/cm^3$ or less. It is not particularly limited in lower limit, and is preferably, for example, 2 $g/cm^3$ or more.

Note that, the large-sized substrate is, for example, a substrate having at least one side of 1000 mm or more.

In the glass according to the present invention, the temperature $T_2$ at which the glass viscosity is $10^2$ dPa·s (hereinafter referred to as a temperature $T_2$) is preferably 1950°C or lower. When the temperature $T_2$ is 1950°C or lower, the glass has excellent meltability and burden on the production equipment can be reduced. For example, the life of equipment such as a furnace for melting the glass can be extended, and productivity can be improved. In addition, defects derived from the furnace, for example, seeding defects and Zr defects can be reduced. The $T_2$ is more preferably 1940°C or lower, still more preferably 1930°C or lower, even more preferably 1900°C or lower, even still more preferably 1880°C or lower, and particularly preferably 1850°C or lower.

The temperature $T_2$ is not particularly limited in lower limit, and is preferably, for example, 1500°C or higher. In order to be capable of using $SO_3$ as the refining agent, the temperature $T_2$ is preferably 1600°C or higher, and more preferably 1650°C or higher.

In the glass according to the present invention, a temperature $T_4$ at which the temperature glass viscosity is $10^4$ dPa·s (hereinafter referred to as a temperature $T_4$) is preferably 1450°C or lower. When the temperature $T_4$ is 1450°C or lower, the glass has excellent formability. In addition, for example, by lowering the temperature in forming the glass, it is possible to reduce an amount of volatile matter in an atmosphere around the glass and thus to further reduce the defects of the glass. Since the glass can be formed at a low temperature, the burden on the production equipment can be reduced. For example, the life of equipment such as a float bath for forming the glass can be extended, and the productivity can be improved. The temperature $T_4$ is more preferably 1440°C or lower, still more preferably 1430°C or lower, particularly preferably 1420°C or lower, even more preferably 1400°C or lower, even still more preferably 1380°C or lower, and particularly preferably 1350°C or lower.

The temperature $T_4$ is not particularly limited in lower limit, and is preferably, for example, 1050°C or higher.

The temperature $T_2$ and the temperature $T_4$ are determined according to a method defined in ASTM C965-96 (2017), by measuring the viscosity using a rotary viscometer, and determining the temperature at which the viscosity is $10^2$ dPa·s or $10^4$ dPa·s. Note that, in Examples to be described later, NBS 710 and NIST SRM717a are used as reference samples for device calibration

The glass according to the present invention preferably has a glass transition temperature $T_g$ of 750°C or lower. When the $T_g$ is 750°C or lower, it is possible to avoid the need to increase the temperature of an annealing device and to prevent a decrease in life of the annealing device. The $T_g$ is more preferably 730°C or lower, and still more preferably 700°C or lower.

The temperature $T_g$ is not particularly limited in lower limit, and is preferably, for example, 450°C or higher.

The glass according to the present invention preferably has an annealing point of 750°C or lower. When the annealing point is 750°C or lower, it is possible to avoid the need to increase the temperature of the annealing device and to prevent the decrease in life of the annealing device. The annealing point is more preferably 730°C or lower, and still more preferably 700°C or lower.

The annealing point is not particularly limited in lower limit, and is preferably, for example, 450°C or higher.

The glass according to the present invention preferably has a surface devitrification temperature of 1400°C or lower. When the surface devitrification temperature is 1400°C or lower, the glass has excellent formability. It is possible to prevent a decrease in transmittance due to generation of crystals inside the glass during forming. In addition, the burden on the production equipment can be reduced. For example, the life of equipment such as a float bath for forming the glass can be extended, and the productivity can be improved.

The surface devitrification temperature is more preferably 1390°C or lower, still more preferably 1380°C or lower, even more preferably 1370°C or lower, even still more preferably 1360°C or lower, yet still more preferably 1355°C or lower, and yet even more preferably 1350°C or lower. The surface devitrification temperature is not particularly limited in lower limit, and is preferably, for example, 900°C or higher.

The surface devitrification temperature in the present invention is determined as follows. That is, pulverized glass particles are charged into a platinum dish, a heat treatment is performed for 17 hours in an electric furnace having a controlled constant temperature, a maximum temperature at which crystals are precipitated on the surface of the glass and a minimum temperature at which no crystals are precipitated are observed using an optical microscope after the heat treatment, and an average value thereof is defined as the surface devitrification temperature.

The glass according to the present invention preferably has an average thermal expansion coefficient at 50°C to 350°C of $20 \times 10^{-7}$/K or more. When the average thermal expansion coefficient at 50°C to 350°C is $20 \times 10^{-7}$/K or more, in the case of using the glass as a glass substrate, it is possible to prevent breakage due to an excessively large difference in expansion coefficient from a metal film formed on the glass substrate. The average thermal expansion coefficient at 50°C to 350°C is more preferably $25 \times 10^{-7}$/K or more.

On the other hand, the average thermal expansion coefficient at 50°C to 350°C is preferably $50 \times 10^{-7}$/K or less. When the average thermal expansion coefficient at 50°C to 350°C is $50 \times 10^{-7}$/K or less, it is possible to prevent the breakage of the glass during a product production process for a high frequency device and the like. The average thermal expansion coefficient at 50°C to 350°C is more preferably $40 \times 10^{-7}$/K or less, still more preferably $37 \times 10^{-7}$/K or less, and even more preferably $35 \times 10^{-7}$/K or less.

In the glass according to the present invention, an elution amount of a glass component per unit surface area when immersed in a 45°C aqueous solution containing 7.7 mass% of $HNO_3$ and 6.5 mass% of $H_2SO_4$ for 170 seconds is preferably 0.05 mg/cm$^2$ or less. In the above test, the shape and the size of the glass is a rectangular sheet-shaped sample having a side length of 31 mm to 36 mm and a thickness of 0.45 mm to 0.75 mm. When a weight before immersion is represented as $weight_{Before}$, a weight after immersion is represented as $weight_{After}$, the length, the width and the thickness of the sheet-shaped sample before immersion are represented as length, width, and thickness, respectively, the elution amount of the glass component per unit surface area is determined according to the following formula.

[Math. 1]

$$\frac{weight_{Before} - weight_{After}}{length \times width \times 2 + (length + width) \times 2 \times thickness}$$

When the elution amount of the glass component is within the above range, the acid resistance is good. The elution amount of the glass component is more preferably 0.04 mg/cm$^2$ or less, still more preferably 0.03 mg/cm$^2$ or less, and particularly preferably 0.02 mg/cm$^2$ or less.

The elution amount of the glass component is not particularly limited in lower limit, and is preferably, for example, 0.0001 mg/cm$^2$ or more.

In the glass according to the present invention, an elution amount of a glass component per unit surface area when immersed in a 60°C aqueous solution containing 1.2 mass% of KOH for 30 minutes is preferably 0.15 mg/cm$^2$ or less. In the above test, the shape and the size of the glass is a rectangular sheet-shaped sample having a side length of 31 mm to 36 mm and a thickness of 0.45 mm to 0.75 mm. When a weight before immersion is represented as $weight_{Before}$, a weight after immersion is represented as $weight_{After}$, the length, the width and the thickness of the sheet-shaped sample before immersion are represented as length, width, and thickness, respectively, the elution amount of the glass component per unit surface area is determined according to the following formula.

[Math. 2]

$$\frac{weight_{Before} - weight_{After}}{length \times width \times 2 + (length + width) \times 2 \times thickness}$$

When the elution amount of the glass component is within the above range, the alkali resistance is good. The elution amount of the glass component is more preferably 0.12 mg/cm$^2$ or less, still more preferably 0.10 mg/cm$^2$ or less, and particularly preferably 0.80 mg/cm$^2$ or less.

The elution amount of the glass component is not particularly limited in lower limit, and is preferably, for example, 0.0001 mg/cm$^2$ or more.

The glass according to the present invention preferably has a Young's modulus of 40 GPa or more. When the Young's modulus is within the above range, it is possible to prevent occurrence of defects such as warping, bending, and breakage of the glass substrate after the formation of the metal film, for example, a Cu film, which is performed in the production process for a high frequency device. The Young's modulus is more preferably 43 GPa or more, still more preferably 45 GPa or more, and even more preferably 47 GPa or more.

The Young's modulus is not particularly limited in upper limit, and is preferably, for example, 70 GPa or less.

The glass according to the present invention preferably has a specific elastic modulus of 20 MN·m/kg or more. When the specific elastic modulus is within the above range, a deflection amount of the glass can be reduced. The specific elastic modulus is more preferably 21 MN·m/kg or more, and still more preferably 22 MN·m/kg or more.

The specific elastic modulus is not particularly limited in upper limit, and is preferably, for example, 35 MN·m/kg or less, more preferably 30 MN·m/kg or less, and still more preferably 25 MN·m/kg or less.

[Glass Sheet]

A glass sheet containing the glass according to the present invention (hereinafter, referred to as the glass sheet according to the present invention) is suitable for a glass substrate for a high frequency device, a panel antenna, a window glass, a vehicular window glass, a cover glass for a touch panel, and the like owing to the above properties.

FIG. 1 is a cross-sectional view showing an example of a configuration of a circuit substrate for a high frequency device. A circuit substrate 1 shown in FIG. 1 includes a glass substrate 2 having insulating properties, a first wiring layer 3 formed on a first main surface 2a of the glass substrate 2, and a second wiring layer 4 formed on a second main surface 2b of the glass substrate 2. The first and second wiring layers 3 and 4 form a microstrip line as an example of a transmission line. The first wiring layer 3 constitutes a signal wiring, and the second wiring layer 4 constitutes a ground line. However, structures of the first and second wiring layers 3 and 4 are not limited thereto. The wiring layer may be formed only on one main surface of the glass substrate 2.

The first and second wiring layers 3 and 4 are layers formed of a conductor, and thicknesses thereof are generally about 0.1 μm to 50 μm. The conductor forming the first and second wiring layers 3 and 4 is not particularly limited, and for example, a metal such as copper, gold, silver, aluminum, titanium, chromium, molybdenum, tungsten, platinum, or nickel, or an alloy or a metal compound containing at least one of these metals is used. The structure of the first and second wiring layers 3 and 4 is not limited to a single-layer structure, and may be, for example, a multilayer structure such as a laminated structure of a titanium layer and a copper layer. A method of forming the first and second wiring layers 3 and 4 is not particularly limited, and various known forming methods such as a printing method using a conductor paste, a dipping method, a plating method, a vapor deposition method, and a sputtering method can be applied.

In the case where the glass sheet according to the present invention is used as the glass substrate 2, the glass substrate 2 preferably has a dielectric loss tangent at a frequency of 10 GHz of 0.005 or less. When the dielectric loss tangent at a frequency of 10 GHz of the glass substrate 2 is 0.005 or less, the dielectric loss can be reduced in a high frequency region of more than 10 GHz. The dielectric loss tangent at a frequency of 10 GHz of the glass substrate 2 is more preferably 0.0045 or less, still more preferably 0.0040 or less, even more preferably 0.0035 or less, even still more preferably 0.0030 or less, and yet still more preferably 0.0025 or less.

The relative dielectric constant at a frequency of 10 GHz of the glass substrate 2 is preferably 4.5 or less, since the dielectric loss can be reduced in the high frequency region. The relative dielectric constant at a frequency of 10 GHz of the glass substrate 2 is more preferably 4.45 or less, still more preferably 4.40 or less, even more preferably 4.35 or less, even still more preferably 4.30 or less, yet still more preferably 4.25 or less, yet even more preferably 4.20 or less, yet even still more preferably 4.15 or less, and further yet even still more preferably 4.10 or less.

Further, the glass substrate 2 has the main surfaces 2a and 2b and end surfaces. It is preferable that at least one of the main surfaces 2a and 2b of the glass substrate 2 on which the first and second wiring layers 3 and 4 are formed has an arithmetic mean roughness Ra of 1.5 nm or less as a surface roughness thereof, and it is more preferable that both main surfaces have an arithmetic mean roughness Ra of 1.5 nm or less. When the arithmetic mean roughness Ra of the main surface is within the above range, skin resistance of the first and second wiring layers 3 and 4 can be decreased even in the case where a skin effect occurs in the first and second wiring layers 3 and 4 in a high frequency region of more than 30 GHz, and accordingly, the conductor loss is reduced.

The arithmetic mean roughness Ra of the main surfaces 2a and 2b of the glass substrate 2 is still more preferably 1 nm or less, and even more preferably 0.5 nm or less. The main surface of the glass substrate 2 refers to a surface on which the wiring layer is formed. In the case where the wiring layer is formed on one main surface, it is sufficient that the value of the arithmetic mean roughness Ra of the one main surface is 1.5 nm or less. Note that, the arithmetic mean roughness Ra in the present description means a value according to JIS B0601 (2001).

The surface roughness of the main surfaces 2a and 2b of the glass substrate 2 can be implemented by a polishing treatment on the surface of the glass substrate 2 as necessary. As the polishing treatment on the surface of the glass substrate 2, for example, polishing using a polishing agent containing cerium oxide, colloidal silica, or the like as a main component and a polishing pad; polishing using a polishing slurry containing a polishing agent and an acidic or alkaline dispersion medium and a polishing pad; or polishing using an acidic or alkaline etchant can be applied.

These polishing treatments are applied according to the surface roughness of a base sheet of the glass substrate 2. For example, preliminary polishing and final polishing may be applied in combination. The end surface of the glass substrate 2 is preferably subjected to chamfering in order to prevent breakage, cracking, and chipping of the glass substrate 2 caused by the end surface during a process flow. A form of chamfering may be C chamfering, R chamfering, thread chamfering, or the like.

By using such a glass substrate 2, the transmission loss of the circuit substrate 1 at a frequency of 10 GHz can be reduced. For example, the transmission loss can be reduced to 1 dB/cm or less. Therefore, since properties such as a quality and intensity of a high frequency signal, particularly a high frequency signal at 10 GHz or more are maintained, it is possible to provide the glass substrate 2 and the circuit substrate 1 suitable for a high frequency device that copes with such a high frequency signal. That is, the properties and the quality of the high frequency device that copes with such a high frequency signal can be improved. The transmission loss of the circuit substrate 1 at a frequency of 10 GHz is preferably 1 dB/cm or less.

The glass sheet according to the present invention is not particularly limited in shape, and preferably has a thickness of 0.75 mm or less. When the thickness of the glass sheet is 0.75 mm or less, in the case of using the glass sheet as a glass substrate for a high frequency device, it is possible to reduce the thickness and the size of the high frequency device, and to further improve production efficiency. In addition, an UV transmittance is improved, and an ultraviolet curable material can be used in the production process for the device to improve the productivity. The thickness of the glass sheet is more preferably 0.7 mm or less, still more preferably 0.6 mm or less, even more preferably 0.5 mm or less, even still more preferably 0.4 mm or less, and yet still more preferably 0.3 mm or less. In addition, the thickness of the glass sheet is preferably 0.01 mm or more, more preferably 0.05 mm or more, and still more preferably 0.1 mm or more.

In the case where the glass sheet is a large-sized substrate, at least one side is preferably 1000 mm or more, more preferably 1500 mm or more, and still more preferably 1800 mm or more. The upper limit is not particularly limited, and the size of one side is generally 4000 mm or less. The glass sheet is preferably rectangular.

[Glass Sheet Production Method]

Next, a glass sheet production method according to the present invention will be described. In the case of producing a glass sheet, a melting step of heating a glass raw material to obtain a molten glass, a refining step of removing bubbles from the molten glass, a forming step of forming the molten glass into a sheet shape to obtain a glass ribbon, and an annealing step of annealing the glass ribbon to room temperature are performed. Alternatively, a method may be used in which the molten glass is formed into a block shape, annealed, and then cut and polished to produce a glass sheet.

In the melting step, raw materials are prepared to have a target glass composition, and the raw materials are continuously charged into a melting furnace and heated to preferably about 1450°C to 1750°C to obtain s molten glass. Since the glass according to the present embodiment has a low resistance value in a temperature range in which the glass raw material is melted, for example, around 1500°C, it is preferable to use an electric melting furnace as the melting furnace and to melt the glass by electrical heating. However, the electrical heating and heating using a burner may be used in combination.

As the raw materials, an oxide, a carbonate, a nitrate, a hydroxide, a halide such as a chloride, and the like can also be used. When there is a step of bringing the molten glass into contact with platinum in the melting or refining step, fine platinum particles may be eluted into the molten glass and mixed as foreign substances in the obtained glass sheet. The use of nitrate raw materials has an effect of preventing generation of platinum foreign substances.

Examples of the nitrate include strontium nitrate, barium nitrate, magnesium nitrate, and calcium nitrate. It is more preferable to use strontium nitrate. As for a particle size of the raw material, raw materials having a large particle diameter of several hundred μm to such an extent that the unmelted residue does not occur to raw materials having a small particle diameter of several μm to such an extent that scattering does not occur at the time of conveying the raw material and aggregation does not occur as secondary particles can be appropriately used. A granular body can also be used. In order to prevent scattering of the raw material, a water content in the raw material can also be appropriately adjusted. Melting conditions such as the Abs-OH and an oxidation-reduction degree of Fe (redox $[Fe^{2+}/(Fe^{2+}+Fe^{3+})]$) can also be appropriately adjusted.

The next refining step is a step of removing bubbles from the molten glass obtained in the above melting step. As the refining step, a defoaming method under a reduced pressure may be applied, or defoaming may be performed at a temperature higher than a melting temperature of the raw material. In addition, $SO_3$ or $SnO_2$ can be used as a refining agent. As a $SO_3$ source, a sulfate of at least one element selected from Al, Na, K, Mg, Ca, Sr, and Ba is preferred, and a sulfate of an alkaline earth metal is more preferred, and among these, $CaSO_4 \cdot 2H_2O$, $SrSO_4$, and $BaSO_4$ are particularly preferred since an action of enlarging bubbles is remarkable.

As the refining agent used in the defoaming method under a reduced pressure, it is preferable to use a halogen such as Cl or F. As a Cl source, a chloride of at least one element selected from Al, Mg, Ca, Sr, and Ba is preferred, a chloride of an alkaline earth metal is more preferred, and among these, $SrCl_2 \cdot 6H_2O$ and $BaCl_2 \cdot 2H_2O$ are still more preferred since the action of enlarging bubbles is remarkable and deliquescence is low. As a F source, a fluoride of at least one element selected from Al, Na, K, Mg, Ca, Sr, and Ba is preferred, a fluoride of an alkaline earth metal is more preferred, and among these, $CaF_2$ is still more preferred since an action of increasing the meltability of the glass raw material is remarkable.

A tin compound represented by $SnO_2$ generates an $O_2$ gas in a glass melt. In the glass melt, $SnO_2$ is reduced to SnO at a temperature of 1450°C or higher to generate the $O_2$ gas, thereby having an action of growing bubbles largely. In the production of the glass sheet, since the glass raw material is heated to about 1450°C to 1750°C and melted, bubbles in the glass melt are more effectively enlarged.

In the case of using $SnO_2$ as a refining agent, the raw material is preferably prepared to contain the tin compound in an amount of 0.001% or more in terms of $SnO_2$ with respect to 100%, i.e., a total amount of a base composition. The content of $SnO_2$ is preferably 0.001% or more since a refining action during melting of the glass raw material is obtained. The content of $SnO_2$ is more preferably 0.015% or more, and still more preferably 0.1% or more. The content of $SnO_2$ is preferably 1% or less since coloring or devitrification of the glass is prevented. The content of the tin compound in the glass is more preferably 0.5% or less, and still more preferably 0.2% or less in terms of $SnO_2$ with respect to 100%, i.e., the total amount of the glass base composition.

The next forming step is a step of forming the molten glass, whose bubbles have been removed in the above refining step, into a sheet shape to obtain a glass ribbon. As the forming step, a known method of forming the glass into a sheet shape, such as a float method in which a molten glass is flowed over a molten metal such as tin to form into a sheet shape to obtain a glass ribbon, an overflow down-draw method (fusion method) in which a molten glass flows downward from a gutter-shaped member, or a slit down-draw method in which a molten glass is flowed downward from a slit, can be applied. Among these, the float method or the fusion method is preferred in terms of non-polishing and light polishing.

Next, the annealing step is a step of cooling the glass ribbon obtained in the above forming step to room temperature under a controlled cooling condition. In the annealing step, the glass ribbon is cooled, and then annealed to room temperature under a predetermined condition. The annealed glass ribbon is cut to obtain the glass sheet.

When a cooling rate in the annealing step is too high, the strain tends to remain in the cooled glass. In addition, an equivalent cooling rate which is a parameter reflecting a fictive temperature is too high, and as a result, shrinkage of the glass cannot be reduced. Therefore, R is preferably set such that the equivalent cooling rate is 800°C/min or less. The equivalent cooling rate is more preferably 600°C/min or less, still more preferably 400°C/min or less, even more preferably 300°C/min or less, even still more preferably 200°C/min or less, yet still more preferably 100°C/min or less, yet even more preferably 60°C/min or less, and particularly preferably 40°C/min or less. On the other hand, when the cooling rate is too low, the time required for the step is too long, resulting in low productivity. Therefore, the cooling rate is set to preferably 0.1°C/min or more, more preferably 0.5°C/min or more, and still more preferably 1°C/min or more. The equivalent cooling rate, which is a parameter reflecting a fictive temperature, is preferably set to an equivalent cooling rate based on a refractive index for ease of evaluation.

Here, a definition of the equivalent cooling rate based on the refractive index and an evaluation method thereof are as follows. A glass having a target composition is processed into a rectangular body of 10 mm × 10 mm × 0.3 mm to 2.0 mm to obtain a glass sample. Using an infrared heating type electric furnace, the glass sample is maintained at the strain point + 170°C for 5 minutes, and then the glass sample is cooled to room temperature (25°C). At this time, a plurality of glass samples are produced by changing the condition, i.e., the cooling rate in a range of 1°C/min to 1000°C/min.

Using a precision refractive index measurement device (for example, KPR 3000 manufactured by Shimadzu Device Corporation), a refractive index $n_d$ of a d-line (wavelength: 587.6 nm) of the plurality of glass samples is measured. For the measurement, a V-block method or a minimum angle of deviation method may be used. A calibration curve of $n_d$ against the cooling rate is obtained by plotting the obtained $n_d$ against a logarithm of the cooling rate.

Next, the $n_d$ of glasses having the same composition which are actually produced through steps such as melting, forming, and cooling is measured by the above measurement method. A corresponding cooling rate (referred to as the equivalent cooling rate in the present embodiment) corresponding to the obtained $n_d$ is determined based on the above calibration curve.

The glass sheet production method according to the present invention is not limited to the above. For example, in the case of producing the glass sheet according to the present invention, the glass may be formed into a sheet shape by a press forming method of directly forming the molten glass into a sheet shape.

In the case of producing the glass sheet according to the present invention, in addition to a production method using a melting tank made of a refractory, a crucible made of platinum or an alloy containing platinum as a main component (hereinafter, referred to as a platinum crucible) may be used in a melting tank or a refining tank. In the case of using the platinum crucible, in the melting step, raw materials are prepared to have a composition of a glass sheet to be obtained, and the platinum crucible including the raw materials is heated in an electric furnace, preferably heated to about 1450°C to 1750°C. A platinum stirrer is inserted and stirring is performed for 1 to 3 hours to obtain a molten glass.

In the forming step in a production process for the glass sheet using a platinum crucible, the molten glass is poured onto, for example, a carbon plate or into a forming frame to form a sheet shape or a block shape. In the annealing step, the temperature is typically maintained at about $T_g$+50°C, then cooled to around the strain point at a rate of about 1°C/min to 10°C/min, and then cooled to room temperature at a cooling rate at which the strain does not remain. After cutting into a predetermined shape and polishing, the glass sheet is obtained. The glass sheet obtained by cutting may be heated, for example, to about $T_g$+50°C, and then annealed to room temperature at a predetermined cooling rate. In this way, the equivalent cooling rate of the glass can be adjusted.

The circuit substrate 1 using the glass sheet according to the present invention as the glass substrate 2 is suitable for a high frequency device that copes with a high frequency signal, particularly, a high frequency signal at a frequency of more than 30 GHz, and further a high frequency signal at a frequency of 35 GHz or more. By reducing the transmission loss of such high frequency signals, it is possible to improve properties such as a quality and intensity of the high frequency signals.

The circuit substrate 1 using the glass sheet according to the present invention as the glass substrate 2 is suitable for a high frequency device (electronic device) such as a semiconductor device for use in a communication device such as a mobile phone, a smartphone, a portable information terminal, or a Wi-Fi device, a surface acoustic wave (SAW) device, a radar component such as a radar transceiver, an antenna component such as a liquid crystal antenna or a panel antenna, and the like.

That is, the present invention relates not only to a glass substrate for a high frequency device containing the glass according to the present invention, but also to a panel antenna containing the glass according to the present invention.

The glass according to the present invention can also be suitably applied to other products for the purpose of reducing the transmission loss of the high frequency signal. That is, the present invention also relates to a window glass, a vehicular window glass, and a cover glass for a touch panel containing the glass according to the present invention.

The glass sheet containing the glass according to the present invention can stably transmit and receive radio waves in a high frequency band, and is less likely to be damaged or broken, and is thus also suitable for a window glass, a vehicular window glass, and a cover glass for a touch panel. As the vehicular window glass, for example, a vehicular window glass for automatic driving is more preferred.

## Examples

Hereinafter, the present invention will be described with reference to Examples, but the present invention is not limited to these Examples. In the following, Examples 1 to 28 are Inventive Examples, and Examples 29 to 31 are Comparative Examples.

Glasses having the compositions (in mol% in terms of oxides) shown in Examples 1 to 31 were prepared. Each of the glass sheets was produced by a melting method using a platinum crucible. Raw materials such as silica sand were mixed to obtain glasses each having the composition shown in Examples 1 to 31, and a batch of 400 g was prepared. The raw materials were charged into the platinum crucible and melted by being heated at a temperature of 1650°C for 1 hour in an electric furnace to obtain a molten glass. In the melting, a platinum stirrer was inserted into the platinum crucible and stirring was performed for 1 hour to homogenize the glass. After heating at a temperature of 1700°C for 3 hours, the molten glass was poured onto a carbon plate and formed into a sheet shape, and then the sheet-shaped glass was charged into an electric furnace at a temperature of about $T_g$+50°C and maintained for 1 hour. The electric furnace was cooled to $T_g$-100°C at a cooling rate of 1°C/min, and then the glass was allowed to cool to room temperature. Thereafter, the glass was cut and polished into a sheet shape to obtain a glass sheet.

Tables 1 to 5 show the relative dielectric constant at a frequency of 10 GHz, the dielectric loss tangent at a frequency of 10 GHz, the $T_2$, the $T_4$, the $T_g$, the average thermal expansion coefficient at 50°C to 350°C, the elution amount of the glass component per unit surface area when immersed in a 45°C aqueous solution containing 7.7 mass% of $HNO_3$ and 6.5 mass% of $H_2SO_4$ for 170 seconds (acid resistance), the elution amount of the glass component per unit surface area when immersed in a 60°C aqueous solution containing 1.2 mass% of KOH for 30 minutes (alkali resistance), the sheet thickness, the Abs-OH, the ΔAbs-OH, the $Abs_{\beta\text{-}OH}$-$Abs_{Base}$, and the $\Delta(Abs_{\beta\text{-}OH}\text{-}Abs_{Base})$ of the glass sheets in Examples 1 to 31. In the tables, the values shown in parentheses are calculated values or estimated values, "-" means that the value is not measured, and "×" means that the value cannot be calculated since the denominator in the formula is 0.

Methods for measuring the physical properties are shown below.

(Relative Dielectric Constant and Dielectric Loss Tangent)

The relative dielectric constant and the dielectric loss tangent were measured using a cavity resonator and a vector network analyzer according to a method defined in JIS R1641 (2007). The measurement frequency is 10 GHz, which is a resonance frequency of air of the cavity resonator.

(Density)

A density of about 20 g of bubble-free glass lump was measured by the Archimedes method.

(Temperature $T_2$)

The viscosity was measured using a rotary viscometer, and the temperature $T_2$ (°C) at which the viscosity was $10^2$ dPa·s was measured according to a method defined in ASTM C 965-96 (2017).

(Temperature $T_4$)

The viscosity was measured using a rotary viscometer, and the temperature $T_4$ (°C) at which the viscosity was $10^4$ dPa·s was measured according to a method defined in ASTM C 965-96 (2017).

($T_g$)

The $T_g$ was measured by a thermal expansion method according to a method defined in JIS R3103-3 (2001).

(Surface Devitrification Temperature)

The glass was pulverized and classified using a test sieve to have a particle diameter in a range of 2 mm to 4 mm. The obtained glass cullet was ultrasonically washed in isopropyl alcohol for 5 minutes, washed with ionexchanged water, then dried, charged into a platinum dish, and subjected to a heat treatment for 17 hours in an electric furnace having a controlled constant temperature. The temperature in the heat treatment was set at an interval of 10°C.

After the heat treatment, the glass was taken out from the platinum dish, and the maximum temperature at which crystals were precipitated on the surface of the glass and the minimum temperature at which no crystals were precipitated were observed by using an optical microscope.

The maximum temperature at which crystals were precipitated on the surface of the glass and the minimum temperature at which no crystals were precipitated were each measured once. Note that, in the case where it is difficult to determine the precipitation of the crystals, the measurement may be performed twice.

An average value of measurement values of the maximum temperature at which crystals were precipitated on the surface of the glass and the minimum temperature at which no crystals were precipitated was determined as the surface devitrification temperature.

(Average Thermal Expansion Coefficient)

The average thermal expansion coefficient was measured using a differential thermal expansion meter according to a method defined in JIS R3102 (1995). A measurement temperature range was 50°C to 350°C, and the unit was $\times 10^{-7}$/K.

(Acid Resistance)

The glass sample is a rectangular glass sheet having a side length of 31 mm to 36 mm and a thickness of 0.45 mm to 0.75 mm, and having mirror surfaces on both surfaces. The glass sample was immersed in an acid aqueous solution (7.7 mass% $HNO_3$ + 6.5 mass% $H_2SO_4$, 45°C) for 170 seconds, and the elution amount (mg/$cm^2$) of the glass component per unit surface area was evaluated. When a weight before immersion is represented as $weight_{Before}$, a weight after immersion is represented as $weight_{After}$, the length, the width and the thickness of the glass sample before immersion are represented as length, width, and thickness, respectively, the elution amount of the glass component per unit surface area is determined according to the following formula.

[Math. 3]

$$\frac{weight_{Before} - weight_{After}}{length \times width \times 2 + (length + width) \times 2 \times thickness}$$

(Alkali Resistance)

The glass sample is a rectangular glass sheet having a side length of 31 mm to 36 mm and a thickness of 0.45 mm to 0.75 mm, and having mirror surfaces on both surfaces. The glass sample was immersed in an alkaline aqueous solution (1.2 mass% KOH, 60°C) for 30 minutes, and the elution amount (mg/$cm^2$) of the glass component per unit surface area was evaluated. When a weight before immersion is represented as $weight_{Before}$, a weight after immersion is represented as $weight_{After}$, the length, the width and the thickness of the glass sample before immersion are represented as length, width, and thickness, respectively, the elution amount of the glass component per unit surface area is determined according to the following formula.

[Math. 4]

$$\frac{weight_{Before} - weight_{After}}{length \times width \times 2 + (length + width) \times 2 \times thickness}$$

(Sheet Thickness (mm))

The thickness was measured using a micrometer ("Coolant Proof Micrometer" Code No. 293 230 30, manufactured by Mitutoyo Corporation).

(Abs-OH and ($Abs_{\beta\text{-}OH}$-$Abs_{Base}$))

The Abs-OH was determined by mirror-polishing both surfaces of a glass sample to obtain a glass sheet having a thickness of 0.45 mm to 0.75 mm, and then measuring the transmittance using FT-IR in a wave number range of 4000 $cm^{-1}$ to 2000 $cm^{-1}$. The Abs-OH was determined according to the following equation, with $\tau_1$ (%) being the transmittance at a wave number of 3846 $cm^{-1}$, and $\tau_2$ (%) being a minimum transmittance at a wave number of 3700 $cm^{-1}$ to 3200 $cm^{-1}$.

$$\text{Abs-OH} = \log_{10}(\tau_2/100)/\log_{10}(\tau_1/100)$$

The ($Abs_{\beta\text{-}OH}$-$Abs_{Base}$) was determined by calculating a difference between $Abs_{\beta\text{-}OH} = -\log_{10}(\tau_2/100)$ and $Abs_{Base} = -\log_{10}(\tau_1/100)$.

(ΔAbs-OH)

The Abs-OH of a glass sheet having a thickness of 0.45 mm to 0.75 mm was measured. The glass sheet was left standing at a temperature of 60°C and a relative humidity of 95%, after 90 hours from start of standing, the Abs-OH of the glass sheet was measured, and a value obtained by subtracting the Abs-OH before the standing from the Abs-OH after the standing was calculated as the ΔAbs-OH.

(Δ($Abs_{\beta\text{-}OH}$-$Abs_{Base}$))

The ($Abs_{\beta\text{-}OH}$-$Abs_{Base}$) of a glass sheet having a thickness of 0.45 mm to 0.75 mm was measured. The glass sheet was left standing at a temperature of 60°C and a relative humidity of 95%, after 90 hours from start of standing, the ($Abs_{\beta\text{-}OH}$-$Abs_{Base}$) of the glass sheet was measured, and a value obtained by subtracting the ($Abs_{\beta\text{-}OH}$-$Abs_{Base}$) before the standing from the ($Abs_{\beta\text{-}OH}$-$Abs_{Base}$) after the standing was calculated as the Δ($Abs_{\beta\text{-}OH}$-$Abs_{Base}$).

Table 1

| [mol%] | Ex. 1 | Ex. 2 | Ex. 3 | Ex. 4 | Ex. 5 | Ex. 6 |
|---|---|---|---|---|---|---|
| $SiO_2$ | 71.3 | 68.8 | 69.4 | 74.0 | 73.0 | 74.0 |
| $Al_2O_3$ | 5.0 | 4.0 | 4.0 | 5.0 | 5.0 | 4.0 |
| $B_2O_3$ | 18.4 | 22.9 | 22.5 | 18.0 | 18.0 | 18.0 |
| MgO | 3.5 | 0 | 0 | 2.2 | 3.2 | 3.2 |
| CaO | 0 | 3.0 | 3.0 | 0 | 0 | 0 |
| SrO | 1.0 | 0.5 | 1.0 | 0.8 | 0.8 | 0.8 |
| BaO | 0.5 | 0.5 | 0 | 0 | 0 | 0 |
| $Li_2O$ | 0 | 0 | 0 | 0 | 0 | 0 |
| $Na_2O$ | 0 | 0 | 0 | 0 | 0 | 0 |
| $K_2O$ | 0 | 0 | 0 | 0 | 0 | 0 |
| Cl | 0.28 | 0.30 | 0.20 | - | - | - |
| $SO_3$ | 0.0078 | 0.0088 | 0.0016 | - | - | - |
| $Fe_2O_3$ | 0.0016 | 0.0014 | 0.0015 | - | - | - |
| $TiO_2$ | 0 | 0 | 0 | 0 | 0 | 0 |
| RO | 5.0 | 4.0 | 4.0 | 3.0 | 4.0 | 4.0 |
| $R_2O$ | 0 | 0 | 0 | 0 | 0 | 0 |
| $SiO_2+B_2O_3$ | 89.7 | 91.7 | 91.8 | 92.0 | 91.0 | 92.0 |
| $B_2O_3-(RO+R_2O-Al_2O_3)$ | 18.4 | 22.9 | 22.5 | 20.0 | 19.0 | 18.0 |
| $Al_2O_3$-RO | 0 | 0 | 0 | 2.0 | 1.0 | 0 |
| $Al_2O_3 \times RO$ | 24.85 | 15.90 | 15.94 | 15.00 | 20.00 | 16.00 |
| $Al_2O_3 \times R_2O$ | 0 | 0 | 0 | 0 | 0 | 0 |
| MgO+CaO | 3.5 | 3.0 | 3.0 | 2.2 | 3.2 | 3.2 |
| SrO+BaO | 1.5 | 1.0 | 1.0 | 0.8 | 0.8 | 0.8 |
| (MgO+CaO)-(SrO+BaO) | 2.0 | 2.0 | 2.0 | 1.4 | 2.4 | 2.4 |
| $((MgO+CaO)-(SrO+BaO))/Al_2O_3$ | 0.40 | 0.50 | 0.50 | 0.28 | 0.48 | 0.60 |
| $MgO/(MgO+Al_2O_3)$ | 0.41 | 0 | 0 | 0.31 | 0.39 | 0.44 |
| $Na_2O/R_2O$ | × | × | × | × | × | × |
| (SrO+BaO)/(MgO+CaO) | 0.43 | 0.33 | 0.33 | 0.36 | 0.25 | 0.25 |
| Relative dielectric constant (10 GHz) | 4.19 | 4.13 | 4.10 | 4.05 | 4.09 | 4.04 |

(continued)

| [mol%] | Ex. 1 | Ex. 2 | Ex. 3 | Ex. 4 | Ex. 5 | Ex. 6 |
|---|---|---|---|---|---|---|
| Dielectric loss tangent (10 GHz) | 0.0018 | 0.0014 | 0.0012 | 0.0013 | 0.0015 | 0.0014 |
| Density (g/cm$^3$) | - | - | - | - | - | - |
| $T_2$ (°C) | (1861) | (1810) | (1819) | (1911) | (1888) | (1915) |
| $T_4$ (°C) | (1376) | (1316) | (1332) | (1419) | (1408) | (1420) |
| $T_g$ (°C) | 659 | 617 | (587) | (611) | (613) | (598) |
| Surface devitrification temperature (°C) | - | - | - | - | - | - |
| Average thermal expansion coefficient ($\times 10^{-7}$/K) | 28.2 | 31.8 | (28.3) | (24.4) | (25.0) | (24.8) |
| Acid resistance (mg/cm$^2$) | 0.002 | 0.014 | 0.021 | (0001) | (0.003) | (0.002) |
| Alkali resistance (mg/cm$^2$) | 0.046 | 0.064 | 0.100 | (0.025) | (0.037) | (0.030) |
| Sheet Thickness (mm) | 0.502 | 0.493 | 0.498 | 0.677 | 0.678 | 0.687 |
| Moisture resistance ($\Delta$Abs-OH) | 0.31 | 1.26 | 0.75 | 0.05 | 0.12 | 0.08 |
| Abs-OH | 1.62 | 1.43 | 4.41 | 1.97 | 1.77 | 1.94 |
| $Abs_{\beta\text{-}OH}-Abs_{Base}$ | 0.034 | 0.024 | 0.176 | 0.060 | 0.047 | 0.058 |
| $\Delta(Abs_{\beta\text{-}OH}-Abs_{Base})$ | 0.02 | 0.06 | 0.03 | 0.01 | 0.01 | 0.01 |

Table 2

| [mol%] | Ex. 7 | Ex. 8 | Ex. 9 | Ex. 10 | Ex. 11 | Ex. 12 |
|---|---|---|---|---|---|---|
| $SiO_2$ | 71.9 | 70.9 | 71.0 | 73.9 | 70.0 | 75.9 |
| $Al_2O_3$ | 4.0 | 5.0 | 5.0 | 5.0 | 4.0 | 0.5 |
| $B_2O_3$ | 20.0 | 22.0 | 22.0 | 19.0 | 24.0 | 21.5 |
| MgO | 0 | 0 | 0 | 0 | 0 | 0 |
| CaO | 3.0 | 1.0 | 2.0 | 2.0 | 2.0 | 0 |
| SrO | 1.0 | 1.0 | 0 | 0 | 0 | 0 |
| BaO | 0 | 0 | 0 | 0 | 0 | 0 |
| $Li_2O$ | 0 | 0 | 0 | 0 | 0 | 0.8 |
| $Na_2O$ | 0 | 0 | 0 | 0 | 0 | 0.8 |
| $K_2O$ | 0 | 0 | 0 | 0 | 0 | 0.4 |
| Cl | 0.17 | 0.08 | 0.04 | 0.09 | 0.03 | 0.12 |
| $SO_3$ | 0.0064 | 0.0033 | 0.0028 | 0.0031 | 0.0038 | 0.0039 |
| $Fe_2O_3$ | 0.0018 | 0.0017 | 0.0015 | 0.0014 | 0.0022 | 0.0014 |
| $TiO_2$ | 0 | 0 | 0 | 0 | 0 | 0 |
| RO | 4.0 | 2.0 | 2.0 | 2.0 | 2.0 | 0 |
| $R_2O$ | 0 | 0 | 0 | 0 | 0 | 2.0 |
| $SiO_2+B_2O_3$ | 91.8 | 92.9 | 93.0 | 92.9 | 94.0 | 97.4 |
| $B_2O_3-(RO+R_2O-Al_2O_3)$ | 20.0 | 25.0 | 25.0 | 22.0 | 26.0 | 20.0 |
| $Al_2O_3-RO$ | 0 | 3.0 | 3.0 | 3.0 | 2.0 | 0.5 |
| $Al_2O_3 \times RO$ | 15.94 | 9.98 | 9.99 | 9.98 | 7.99 | 0 |
| $Al_2O_3 \times R_2O$ | 0 | 0 | 0 | 0 | 0 | 1.00 |
| MgO+CaO | 3.0 | 1.0 | 2.0 | 2.0 | 2.0 | 0 |

(continued)

| [mol%] | Ex. 7 | Ex. 8 | Ex. 9 | Ex. 10 | Ex. 11 | Ex. 12 |
|---|---|---|---|---|---|---|
| SrO+BaO | 1.0 | 1.0 | 0 | 0 | 0 | 0 |
| (MgO+CaO)-(SrO+BaO) | 2.0 | 0 | 2.0 | 2.0 | 2.0 | 0 |
| ((MgO+CaO)-(SrO+BaO))/$Al_2O_3$ | 0.50 | 0 | 0.40 | 0.40 | 0.50 | 0 |
| MgO/(MgO+$Al_2O_3$) | 0 | 0 | 0 | 0 | 0 | 0 |
| $Na_2O/R_2O$ | × | × | × | × | × | 0.40 |
| (SrO+BaO)/(MgO+CaO) | 0.33 | 1.00 | 0 | 0 | 0 | × |
| Relative dielectric constant (10 GHz) | 4.12 | 4.03 | 4.00 | 4.02 | 3.96 | 3.87 |
| Dielectric loss tangent (10 GHz) | 0.0013 | 0.0011 | 0.0011 | 0.0012 | 0.0013 | 0.0016 |
| Density (g/cm$^3$) | - | 2.17 | 2.16 | 2.17 | 2.14 | - |
| $T_2$ (°C) | (1861) | (1861) | (1846) | (1897) | (1840) | (1802) |
| $T_4$ (°C) | (1366) | (1366) | (1362) | (1403) | (1348) | (1151) |
| $T_g$ (°C) | (598) | (591) | 643 | 670 | 584 | (504) |
| Surface devitrification temperature (°C) | - | 1350 or less | 1350 or less | 1250 or less | 1250 or less | - |
| Average thermal expansion coefficient (× $10^{-7}$/K) | (27.1) | (25.9) | 28.9 | 25.2 | 30.8 | (27.6) |
| Acid resistance (mg/cm$^2$) | 0.008 | (0.003) | 0.001 | 0.000 | 0.001 | (0000) |
| Alkali resistance (mg/cm$^2$) | 0.054 | (0.033) | 0.029 | 0.021 | 0.034 | (0.013) |
| Sheet Thickness (mm) | 0.483 | 0.650 | 0.680 | 0.694 | 0.678 | 0.705 |
| Moisture resistance (ΔAbs-OH) | 0.27 | 0.27 | 0.67 | 0.23 | 1.79 | 0.07 |
| Abs-OH | 4.43 | 1.89 | 1.61 | 1.47 | 3.65 | 4.30 |
| $Abs_{\beta\text{-}OH}$-$Abs_{Base}$ | 0.170 | 0.054 | 0.040 | 0.029 | 0.180 | 0.206 |
| Δ($Abs_{\beta\text{-}OH}$-$Abs_{Base}$) | 0.02 | 0.02 | 0.04 | 0.01 | 0.13 | 0.02 |

Table 3

| [mol%] | Ex. 13 | Ex. 14 | Ex. 15 | Ex. 16 | Ex. 17 | Ex. 18 |
|---|---|---|---|---|---|---|
| $SiO_2$ | 74.9 | 74.9 | 74.9 | 74.9 | 71.0 | 72.0 |
| $Al_2O_3$ | 0.5 | 0.50 | 0.50 | 0.50 | 4.0 | 5.0 |
| $B_2O_3$ | 22.5 | 22.5 | 22.5 | 22.5 | 22.0 | 20.0 |
| MgO | 0 | 0 | 0 | 0 | 0 | 0 |
| CaO | 0 | 0 | 0 | 0 | 2.0 | 1.0 |
| SrO | 0 | 0 | 0 | 0 | 1.0 | 1.0 |
| BaO | 0 | 0 | 0 | 0 | 0 | 1.0 |
| $Li_2O$ | 0.8 | 0.8 | 0.8 | 0.8 | 0 | 0 |
| $Na_2O$ | 0.9 | 0.9 | 0.9 | 0.9 | 0 | 0 |
| $K_2O$ | 0.3 | 0.3 | 0.3 | 0.3 | 0 | 0 |
| Cl | 0.15 | 0.09 | 0.10 | 0.13 | 0 | 0 |
| $SO_3$ | 0.0078 | 0.0020 | 0.0060 | 0.0038 | 0 | 0 |
| $Fe_2O_3$ | 0.0011 | 0.0016 | 0.0011 | 0.0009 | 0 | 0 |

(continued)

| [mol%] | Ex. 13 | Ex. 14 | Ex. 15 | Ex. 16 | Ex. 17 | Ex. 18 |
|---|---|---|---|---|---|---|
| $TiO_2$ | 0 | 0 | 0 | 0 | 0 | 0 |
| RO | 0 | 0 | 0 | 0 | 3.0 | 3.0 |
| $R_2O$ | 2.0 | 2.0 | 2.0 | 2.0 | 0 | 0 |
| $SiO_2+B_2O_3$ | 97.3 | 97.3 | 97.3 | 97.3 | 93.0 | 92.0 |
| $B_2O_3$-(RO+$R_2O$-$Al_2O_3$) | 21.0 | 21.0 | 21.0 | 21.0 | 23.0 | 22.0 |
| $Al_2O_3$-RO | 0.5 | 0.5 | 0.5 | 0.5 | 1.0 | 2.0 |
| $Al_2O_3 \times RO$ | 0 | 0 | 0 | 0 | 12.0 | 15.0 |
| $Al_2O_3 \times R_2O$ | 1.00 | 1.00 | 1.00 | 1.00 | 0 | 0 |
| MgO+CaO | 0 | 0 | 0 | 0 | 2.0 | 1.0 |
| SrO+BaO | 0 | 0 | 0 | 0 | 1.0 | 2.0 |
| (MgO+CaO)-(SrO+BaO) | 0 | 0 | 0 | 0 | 1.0 | -1.0 |
| ((MgO+CaO)-(SrO+BaO))/$Al_2O_3$ | 0 | 0 | 0 | 0 | 0.25 | -0.20 |
| MgO/(MgO+$Al_2O_3$) | 0 | 0 | 0 | 0 | 0 | 0 |
| $Na_2O/R_2O$ | 0.45 | 0.45 | 0.45 | 0.45 | × | × |
| (SrO+BaO)/(MgO+CaO) | × | × | × | × | × | × |
| Relative dielectric constant (10 GHz) | 3.84 | 3.89 | 3.88 | 3.87 | (4.06) | (4.16) |
| Dielectric loss tangent (10 GHz) | 0.0014 | 0.0014 | 0.0015 | 0.0014 | (00010) | (0.0012) |
| Density (g/cm$^3$) | - | - | - | - | - | - |
| $T_2$ (°C) | (1800) | - | - | - | (1858) | (1876) |
| $T_4$ (°C) | (1135) | - | - | - | (1359) | (1358) |
| $T_g$ (°C) | (499) | - | - | - | (583) | (598) |
| Surface devitrification temperature (°C) | - | - | - | - | - | - |
| Average thermal expansion coefficient (× $10^{-7}$/K) | (27.9) | - | - | - | (26.8) | (26.5) |
| Acid resistance (mg/cm$^2$) | (0000) | - | - | - | (0001) | (0001) |
| Alkali resistance (mg/cm$^2$) | (0.016) | - | - | - | (0.071) | (0.057) |
| Sheet Thickness (mm) | 0.684 | 0.6762 | 0.692 | 0.6832 | - | - |
| Moisture resistance (ΔAbs-OH) | 0.99 | - | - | - | (0.95) | (0.40) |
| Abs-OH | 4.26 | - | - | - | - | - |
| $Abs_{\beta\text{-}OH}$-$Abs_{Base}$ | 0.206 | - | - | - | - | - |
| Δ($Abs_{\beta\text{-}OH}$-$Abs_{Base}$) | 0.04 | - | - | - | (0 to 0.05) | (0 to 0.05) |

Table 4

| [mol%] | Ex. 19 | Ex. 20 | Ex. 21 | Ex. 22 | Ex. 23 | Ex. 24 |
|---|---|---|---|---|---|---|
| $SiO_2$ | 71.0 | 74.0 | 70.0 | 70.0 | 77.0 | 74.0 |
| $Al_2O_3$ | 5.0 | 4.0 | 4.0 | 3.0 | 0.3 | 0.3 |
| $B_2O_3$ | 22.0 | 20.0 | 24.0 | 24.0 | 20.5 | 23.5 |
| MgO | 0 | 0 | 0 | 0.5 | 0 | 0 |
| CaO | 1.0 | 1.0 | 1.0 | 1.0 | 0 | 0 |
| SrO | 1.0 | 1.0 | 1.0 | 1.0 | 0 | 0 |

(continued)

| [mol%] | Ex. 19 | Ex. 20 | Ex. 21 | Ex. 22 | Ex. 23 | Ex. 24 |
|---|---|---|---|---|---|---|
| BaO | 0 | 0 | 0 | 0.5 | 0 | 0 |
| $Li_2O$ | 0 | 0 | 0 | 0 | 1.0 | 1.0 |
| $Na_2O$ | 0 | 0 | 0 | 0 | 1.0 | 0.9 |
| $K_2O$ | 0 | 0 | 0 | 0 | 0.2 | 0.3 |
| Cl | 0 | 0 | 0 | 0 | 0 | 0 |
| $SO_3$ | 0 | 0 | 0 | 0 | 0 | 0 |
| $Fe_2O_3$ | 0 | 0 | 0 | 0 | 0 | 0 |
| $TiO_2$ | 0 | 0 | 0 | 0 | 0 | 0 |
| RO | 2.0 | 2.0 | 2.0 | 3.0 | 0 | 0 |
| $R_2O$ | 0 | 0 | 0 | 0 | 2.2 | 2.2 |
| $SiO_2+B_2O_3$ | 93.0 | 94.0 | 94.0 | 94.0 | 97.5 | 97.5 |
| $B_2O_3$-(RO+$R_2O$-$Al_2O_3$) | 25.0 | 22.0 | 26.0 | 24.0 | 18.6 | 21.6 |
| $Al_2O_3$-RO | 3.0 | 2.0 | 2.0 | 0 | 0.3 | 0.3 |
| $Al_2O_3 \times RO$ | 10.0 | 8.0 | 8.0 | 9.0 | 0 | 0 |
| $Al_2O_3 \times R_2O$ | 0 | 0 | 0 | 0 | 0.66 | 0.66 |
| MgO+CaO | 1.0 | 1.0 | 1.0 | 1.5 | 0 | 0 |
| SrO+BaO | 1.0 | 1.0 | 1.0 | 1.5 | 0 | 0 |
| (MgO+CaO)-(SrO+BaO) | 0 | 0 | 0 | 0 | 0 | 0 |
| ((MgO+CaO)-(SrO+BaO))/$Al_2O_3$ | 0 | 0 | 0 | 0 | 0 | 0 |
| MgO/(MgO+$Al_2O_3$) | 0 | 0 | 0 | 0 | 0 | 0 |
| $Na_2O/R_2O$ | × | × | × | × | 0.45 | 0.41 |
| (SrO+BaO)/(MgO+CaO) | × | × | × | × | × | × |
| Relative dielectric constant (10 GHz) | (4.02) | (4.06) | (3.96) | (4.00) | (3.98) | (3.92) |
| Dielectric loss tangent (10 GHz) | (00010) | (00010) | (00009) | (00009) | (0.0018) | (0.0016) |
| Density (g/cm$^3$) | - | - | - | - | - | - |
| $T_2$ (°C) | (1861) | (1921) | (1854) | (1860) | - | - |
| $T_4$ (°C) | (1366) | (1406) | (1351) | (1341) | - | - |
| $T_g$ (°C) | (591) | (605) | (567) | (551) | (497) | (488) |
| Surface devitrification temperature (°C) | - | - | - | - | - | - |
| Average thermal expansion coefficient (× $10^{-7}$/K) | (25.9) | (24.7) | (26.7) | (27.5) | (27.4) | (28.7) |
| Acid resistance (mg/cm$^2$) | (0001) | (0000) | (0001) | (0.002) | (0000) | (0000) |
| Alkali resistance (mg/cm$^2$) | (0.057) | (0.033) | (0.071) | (0.089) | (0.022) | (0.039) |
| Sheet Thickness (mm) | - | - | - | - | - | - |
| Moisture resistance (ΔAbs-OH) | (0.77) | (0.45) | (1.33) | (1.51) | (0.21) | (0.87) |
| Abs-OH | - | - | - | - | - | - |
| $Abs_{\beta\text{-}OH}$-$Abs_{Base}$ | - | - | - | - | - | - |
| Δ($Abs_{\beta\text{-}OH}$-$Abs_{Base}$) | (0 to 0.05) | (0 to 0.05) | (0 to 0.1) | (0 to 0.1) | (0 to 0.05) | (0 to 0.1) |

Table 5

| [mol%] | Ex. 25 | Ex. 26 | Ex. 27 | Ex. 28 | Ex. 29 | Ex. 30 | Ex. 31 |
|---|---|---|---|---|---|---|---|
| $SiO_2$ | 76.8 | 75.8 | 75.8 | 75.0 | 59.7 | 64.4 | 68.0 |
| $Al_2O_3$ | 0.4 | 0.4 | 0.4 | 0.2 | 4.0 | 4.0 | 4.0 |
| $B_2O_3$ | 21.0 | 22.0 | 22.0 | 23.0 | 30.0 | 27.4 | 26.0 |
| MgO | 0 | 0 | 0 | 0 | 3.2 | 0 | 0 |
| CaO | 0 | 0 | 0 | 0 | 0 | 3.0 | 2.0 |
| SrO | 0 | 0 | 0 | 0 | 0.8 | 1.0 | 0 |
| BaO | 0 | 0 | 0 | 0 | 0.2 | 0 | 0 |
| $Li_2O$ | 0.4 | 0.9 | 0.4 | 0.7 | 0 | 0 | 0 |
| $Na_2O$ | 1.2 | 0.6 | 1.0 | 0.8 | 0 | 0 | 0 |
| $K_2O$ | 0.2 | 0.3 | 0.4 | 0.3 | 0 | 0 | 0 |
| Cl | 0 | 0 | 0 | 0 | 0.10 | 0.19 | 0.03 |
| $SO_3$ | 0 | 0 | 0 | 0 | 0.0070 | 0.0035 | 0.0038 |
| $Fe_2O_3$ | 0 | 0 | 0 | 0 | 0.0028 | 0.0015 | 0.0015 |
| $TiO_2$ | 0 | 0 | 0 | 0 | 2.0 | 0 | 0 |
| RO | 0 | 0 | 0 | 0 | 4.2 | 4.0 | 2.0 |
| $R_2O$ | 1.8 | 1.8 | 1.8 | 1.8 | 0 | 0 | 0 |
| $SiO_2+B_2O_3$ | 97.8 | 97.8 | 97.8 | 98.0 | 89.7 | 91.8 | 94.0 |
| $B_2O_3$-(RO+$R_2O$-$Al_2O_3$) | 19.6 | 20.6 | 20.6 | 21.4 | 29.8 | 27.4 | 28.0 |
| $Al_2O_3$-RO | 0.4 | 0.4 | 0.4 | 0.2 | -0.2 | 0 | 2.0 |
| $Al_2O_3$×RO | 0 | 0 | 0 | 0 | 16.8 | 15.9 | 8.0 |
| $Al_2O_3$×$R_2O$ | 0.72 | 0.72 | 0.72 | 0.36 | 0 | 0 | 0 |
| MgO+CaO | 0 | 0 | 0 | 0 | 3.2 | 3.0 | 2.0 |
| SrO+BaO | 0 | 0 | 0 | 0 | 1.0 | 1.0 | 0 |
| (MgO+CaO)-(SrO+BaO) | 0 | 0 | 0 | 0 | 2.2 | 2.0 | 2.0 |
| ((MgO+CaO)-(SrO+BaO))/A-$l_2O_3$ | 0 | 0 | 0 | 0 | 0.55 | 0.50 | 0.50 |
| MgO/(MgO+$Al_2O_3$) | 0 | 0 | 0 | 0 | 0 | 0 | 0 |
| $Na_2O$/$R_2O$ | 0.67 | 0.33 | 0.56 | 0.44 | × | × | × |
| (SrO+BaO)/(MgO+CaO) | × | × | × | × | × | × | × |
| Relative dielectric constant (10 GHz) | (3.95) | (3.90) | (3.93) | (3.89) | 4.09 | 4.07 | 3.96 |
| Dielectric loss tangent (10 GHz) | (0.0021) | (0.0012) | (00019) | (0.0015) | 0.0013 | 0.0011 | 0.0012 |
| Density (g/$cm^3$) | - | - | - | - | - | - | - |
| $T_2$ (°C) | - | - | - | - | (1696) | (1735) | (1806) |
| $T_4$ (°C) | - | - | - | - | (1239) | (1264) | (1321) |
| $T_g$ (°C) | (507) | (502) | (506) | (493) | (575) | (567) | 569 |
| Surface devitrification temperature (°C) | - | - | - | - | - | - | - |
| Average thermal expansion coefficient (× $10^{-7}$/K) | (26.8) | (27.2) | (27.5) | (27.9) | (29.4) | (31.2) | 32.1 |

(continued)

| [mol%] | Ex. 25 | Ex. 26 | Ex. 27 | Ex. 28 | Ex. 29 | Ex. 30 | Ex. 31 |
|---|---|---|---|---|---|---|---|
| Acid resistance ($mg/cm^2$) | (0000) | (0000) | (0000) | (0000) | - | 0.058 | 0.002 |
| Alkali resistance ($mg/cm^2$) | (0.021) | (0.026) | (0.026) | (0.030) | - | 0.160 | 0.043 |
| Sheet Thickness (mm) | - | - | - | - | 0.495 | 0.483 | 0.691 |
| Moisture resistance (ΔAbs-OH) | (0.43) | (0.65) | (0.65) | (0.89) | 7.22 | 4.44 | 7.62 |
| Abs-OH | - | - | - | - | 3.93 | 4.49 | 3.98 |
| $Abs_{\beta\text{-}OH}$-$Abs_{Base}$ | - | - | - | - | 0.178 | 0.185 | 0.209 |
| Δ($Abs_{\beta\text{-}OH}$-$Abs_{Base}$) | (0 to 0.05) | (0 to 0.1) | (0 to 0.05) | (0 to 0.05) | 0.48 | 0.24 | 0.62 |

In Examples 1 to 8 and Examples 17 to 22 in which SrO is 0.1% to 4%, [$Al_2O_3$]×[RO] is more than 0 to 30, [MgO]+[CaO] is 0.1 to 5.9, and [MgO]/([MgO]+[$Al_2O_3$]) is 0 to 0.45, the relative dielectric constant at a frequency of 10 GHz is 4.5 or less, the dielectric loss tangent at a frequency of 10 GHz is 0.005 or less, the acid resistance evaluation is 0.05 $mg/cm^2$ or less, the alkali resistance evaluation is 0.15 $mg/cm^2$ or less, the ΔAbs-OH is 4.0 or less, and the Δ($Abs_{\beta\text{-}OH}$-$Abs_{Base}$) is 0.2 or less.

In Examples 2 and 3, Examples 7 to 11, and Examples 17 to 22 in which CaO is 0.1% to 6%, [$Al_2O_3$]×[RO] is more than 0 to 28, and (([MgO]+[CaO])-([SrO]+[BaO]))/[$Al_2O_3$] is -3.0 to 0.60, the relative dielectric constant at a frequency of 10 GHz is 4.5 or less, the dielectric loss tangent at a frequency of 10 GHz is 0.005 or less, the acid resistance evaluation is 0.05 $mg/cm^2$ or less, the alkali resistance evaluation is 0.15 $mg/cm^2$ or less, the ΔAbs-OH is 4.0 or less, and the Δ($Abs_{\beta\text{-}OH}$-$Abs_{Base}$) is 0.2 or less.

In Examples 12 and 13 and Examples 23 to 28 in which $Li_2O$ is more than 0%, $K_2O$ is more than 0% to 0.8%, $R_2O$ is more than 0% to 4%, [$Al_2O_3$]×[$R_2O$] is more than 0 to 1.40, and [$Na_2O$]/[$R_2O$] is 0.30 to 0.99, the relative dielectric constant at a frequency of 10 GHz is 4.5 or less, the dielectric loss tangent at a frequency of 10 GHz is 0.005 or less, the acid resistance evaluation is 0.05 $mg/cm^2$ or less, the alkali resistance evaluation is 0.15 $mg/cm^2$ or less, the ΔAbs-OH is 4.0 or less, and the Δ($Abs_{\beta\text{-}OH}$-$Abs_{Base}$) is 0.2 or less.

In Example 29 in which $SiO_2$ is less than 68% and [$B_2O_3$]-([RO]+[$R_2O$]-[$Al_2O_3$]) is more than 27%, the ΔAbs-OH and the Δ($Abs_{\beta\text{-}OH}$-$Abs_{Base}$) are greater than those in Inventive Examples, and the moisture resistance is poor.

In Example 30 in which $SiO_2$ is less than 68% and [$B_2O_3$]-([RO]+[$R_2O$]-[$Al_2O_3$]) is more than 27%, the ΔAbs-OH and the Δ($Abs_{\beta\text{-}OH}$-$Abs_{Base}$) are greater than those in Inventive Examples, and the moisture resistance is poor. In addition, the acid resistance and the alkali resistance are also poor.

In Example 31 in which [$B_2O_3$]-([RO]+[$R_2O$]-[$Al_2O_3$]) is more than 27%, the ΔAbs-OH and the Δ($Abs_{\beta\text{-}OH}$-$Abs_{Base}$) are greater than those in Inventive Examples, and the moisture resistance is poor.

FIG. 2 is a graph showing a relationship between [$B_2O_3$]-([RO]+[$R_2O$]-[$Al_2O_3$]) and the ΔAbs-OH, in which results of Examples 1 to 13 and Examples 26 to 28 are plotted. As seen from FIG. 2, as [$B_2O_3$]-([RO]+[$R_2O$]-[$Al_2O_3$]) increases, the moisture resistance of the glass deteriorates. In addition, when [$B_2O_3$]-([RO]+[$R_2O$]-[$Al_2O_3$]) is more than 27%, the ΔAbs-OH increases remarkably. Since the glass according to the present invention has [$B_2O_3$]-([RO]+[$R_2O$]-[$Al_2O_3$]) of 27% or less, the ΔAbs-OH is small, and the glass exhibits excellent moisture resistance.

FIG. 3 is a graph showing a relationship between the content of Cl and the Abs-OH in the glasses in Examples 13 to 16. As seen from FIG. 3, as the content of Cl in the glass increases, the Abs-OH tends to decrease. FIG. 4 is a graph showing a relationship between the Abs-OH and the relative dielectric constant and the dielectric loss tangent at a frequency of 10 GHz in Examples 13 to 16. As seen from FIG. 4, as the Abs-OH decreases, the relative dielectric constant and the dielectric loss tangent decrease, and the dielectric properties are improved. Therefore, it has been shown that the addition of Cl improves the dielectric properties.

Although the present invention has been described in detail with reference to specific embodiments, it is apparent to those skilled in the art that various changes and modifications can be made without departing from the spirit and scope of the present invention.

## INDUSTRIAL APPLICABILITY

The glass according to the present invention has a low surface devitrification temperature, has excellent chemical resistance and moisture resistance, and can reduce a dielectric loss of a high frequency signal. A glass sheet containing such a glass is useful for a general high frequency electronic device that copes with a high frequency signal at 10 GHz or more, particularly a high frequency signal at 30 GHz or more, and further a high frequency signal at a frequency of 35 GHz or more, for example, a glass substrate of a communication device (such as a substrate for use in an antenna module necessary for wireless communication and a high frequency passive element), a frequency filter component such as a SAW device and FBAR, a band-pass filter such as a waveguide tube, a substrate integrated waveguide (SIW) component, a radar component, an antenna component (such as a liquid crystal antenna most suitable for satellite communication), a window glass, a vehicular window glass, a display panel, and the like.

Although the present invention has been described in detail with reference to specific aspects, it is apparent to those skilled in the art that various changes and modifications can be made without departing from the spirit and scope of the present invention. Note that, the present application is based on a Japanese patent application (Japanese Patent Application No. 2022-077216) filed on May 9, 2022, the entire contents of which are incorporated herein by reference. In addition, all references cited here are entirely incorporated.

REFERENCE SIGNS LIST

1: circuit substrate
2: glass substrate
2a, 2b: main surface
3, 4: wiring layer

**Claims**

**1.** A glass comprising, in mol% in terms of oxides:

68% or more of $SiO_2$;
0.1% to 8% of $Al_2O_3$; and
0.1% to 4% of SrO, wherein
$[SiO_2]+[B_2O_3]$ is 88% or more,
$[B_2O_3]-([RO]+[R_2O]-[Al_2O_3])$ is 27% or less,
a relative dielectric constant at 25°C and a frequency of 10 GHz is 4.5 or less,
a dielectric loss tangent at 25°C and a frequency of 10 GHz is 0.005 or less,
ΔAbs-OH as calculated by the following method is 4.0 or less,
a total content (RO) of MgO, CaO, SrO, and BaO is more than 0% to 6%,
a total content ($R_2O$) of $Li_2O$, $Na_2O$, and $K_2O$ is 0% to 1%,
$[Al_2O_3]-[RO]$ is -3% to less than 8%,
$[Al_2O_3]\times[RO]$ is more than 0 to 30,
$[MgO]+[CaO]$ is 0.1% to 5.9%, and
$[MgO]/([MgO]+[Al_2O_3])$ is 0 to 0.45,
provided that [ ] indicates a content of a component described in the bracket expressed in mol% in terms of oxides,
method: a glass is made into a glass sheet having a thickness of 0.45 mm to 0.75 mm and Abs-OH of the glass sheet is measured, then the glass sheet is left standing at a temperature of 60°C and a relative humidity of 95%, after 90 hours from start of standing, Abs-OH of the glass sheet is measured, and a value obtained by subtracting the Abs-OH before the standing from the Abs-OH after the standing is calculated as the ΔAbs-OH.

**2.** A glass comprising, in mol% in terms of oxides:

68% or more of $SiO_2$;
0.1% to 8% of $Al_2O_3$; and
0.1% to 6% of CaO, wherein
$[SiO_2]+[B_2O_3]$ is 88% or more,
$[B_2O_3]-([RO]+[R_2O]-[Al_2O_3])$ is 27% or less,
a relative dielectric constant at 25°C and a frequency of 10 GHz is 4.5 or less,
a dielectric loss tangent at 25°C and a frequency of 10 GHz is 0.005 or less,
ΔAbs-OH as calculated by the following method is 4.0 or less,
a total content (RO) of MgO, CaO, SrO, and BaO is more than 0% to 6%,
a total content ($R_2O$) of $Li_2O$, $Na_2O$, and $K_2O$ is 0% to 1%,
$[Al_2O_3]-[RO]$ is -3% to less than 8%,

$[Al_2O_3]\times[RO]$ is more than 0 to 28, and
$(([MgO]+[CaO])-([SrO]+[BaO]))/[Al_2O_3]$ is -3.0 to 0.60,
provided that [ ] indicates a content of a component described in the bracket expressed in mol% in terms of oxides,
method: a glass is made into a glass sheet having a thickness of 0.45 mm to 0.75 mm and Abs-OH of the glass sheet is measured, then the glass sheet is left standing at a temperature of 60°C and a relative humidity of 95%, after 90 hours from start of standing, Abs-OH of the glass sheet is measured, and a value obtained by subtracting the Abs-OH before the standing from the Abs-OH after the standing is calculated as the ΔAbs-OH.

**3.** A glass comprising, in mol% in terms of oxides:

68% or more of $SiO_2$,
0.1% to 8% of $Al_2O_3$;
more than 0% of $Li_2O$; and
more than 0% to 0.8% of $K_2O$, wherein
$[SiO_2]+[B_2O_3]$ is 88% or more,
$[B_2O_3]-([RO]+[R_2O]-[Al_2O_3])$ is 27% or less,
a relative dielectric constant at 25°C and a frequency of 10 GHz is 4.5 or less,
a dielectric loss tangent at 25°C and a frequency of 10 GHz is 0.005 or less,
ΔAbs-OH as calculated by the following method is 4.0 or less,
a total content (RO) of MgO, CaO, SrO, and BaO is 0% to 0.5%,
a total content ($R_2O$) of $Li_2O$, $Na_2O$, and $K_2O$ is more than 0% to 4%,
$[Al_2O_3]\times[R_2O]$ is more than 0 to 1.40, and
$[Na_2O]/[R_2O]$ is 0.30 to 0.99,
provided that [ ] indicates a content of a component described in the bracket expressed in mol% in terms of oxides,
method: a glass is made into a glass sheet having a thickness of 0.45 mm to 0.75 mm and Abs-OH of the glass sheet is measured, then the glass sheet is left standing at a temperature of 60°C and a relative humidity of 95%, after 90 hours from start of standing, Abs-OH of the glass sheet is measured, and a value obtained by subtracting the Abs-OH before the standing from the Abs-OH after the standing is calculated as the ΔAbs-OH.

**4.** The glass according to any one of claims 1 to 3, wherein an acid resistance as calculated by the following method is 0.05 $mg/cm^2$ or less, and an alkali resistance as calculated by the following method is 0.15 $mg/cm^2$ or less:

acid resistance evaluation method: a glass is made into a rectangular glass sheet having a side length of 31 mm to 36 mm and a thickness of 0.45 mm to 0.75 mm, the glass sheet is immersed in an acid aqueous solution (a 45°C aqueous solution containing 7.7 mass% of $HNO_3$ and 6.5 mass% of $H_2SO_4$) for 170 seconds, and an elution amount ($mg/cm^2$) of a glass component per unit surface area is calculated as the acid resistance, and
alkali resistance evaluation method: a glass is made into a rectangular glass sheet having a side length of 31 mm to 36 mm and a thickness of 0.45 mm to 0.75 mm, the glass sheet is immersed in an alkaline aqueous solution (a 60°C aqueous solution containing 1.2 mass% of KOH) for 30 minutes, and an elution amount ($mg/cm^2$) of a glass component per unit surface area is calculated as the alkali resistance.

**5.** The glass according to any one of claims 1 to 3, further comprising:
0.01% or more of Cl in mol% in terms of oxides.

**6.** The glass according to any one of claims 1 to 3, wherein the Abs-OH is 0.1 to 10.

**7.** The glass according to any one of claims 1 to 3, having an average thermal expansion coefficient at 50°C to 350°C of $20\times10^{-7}/K$ to $50\times10^{-7}/K$.

**8.** The glass according to any one of claims 1 to 3, having a glass transition temperature of 750°C or lower.

**9.** A glass sheet comprising:

the glass according to any one of claims 1 to 3, wherein
the glass sheet has a main surface and an end surface and has a thickness of 0.75 mm or less.

**10.** A glass sheet production method comprising:
producing the glass according to any one of claims 1 to 3 by a float method or a fusion method.

**11.** A glass substrate comprising the glass according to any one of claims 1 to 3, wherein the glass substrate is used in a high frequency device that copes with a high frequency signal at 10 GHz or more.

**12.** A glass substrate comprising:

the glass according to any one of claims 1 to 3, wherein
a wiring layer is formed on the glass substrate.

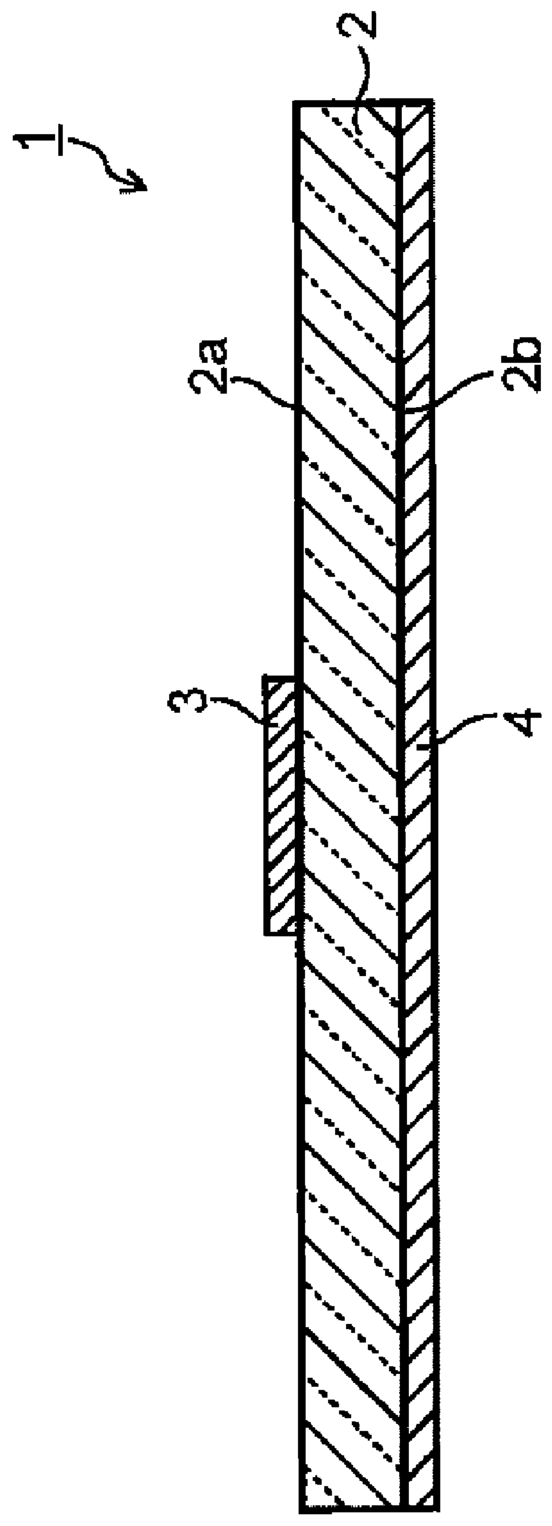


FIG. 1

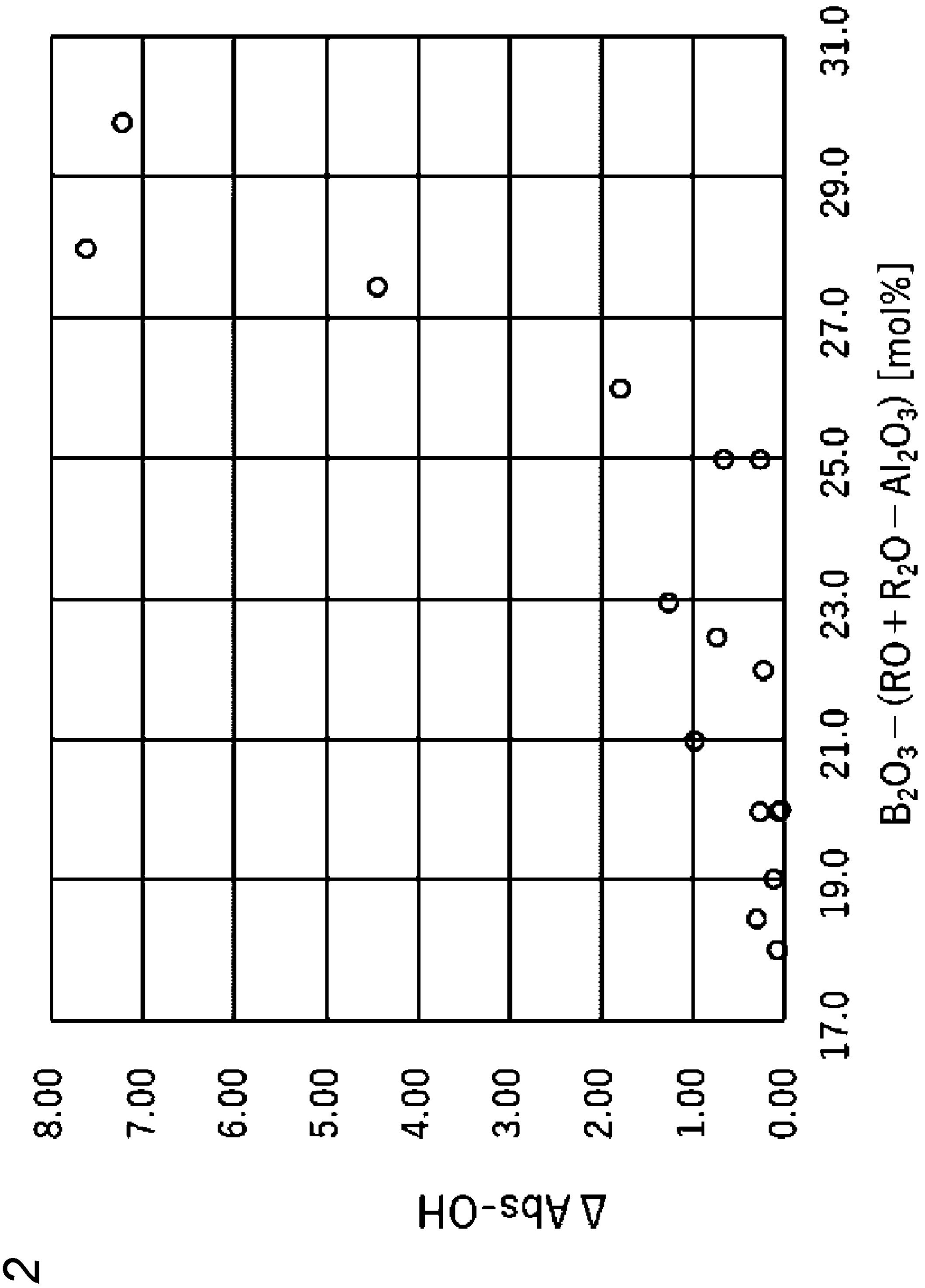

ΔAbs-OH
0.00
1.00
2.00
3.00
4.00
5.00
6.00
7.00
8.00
17.0
19.0
21.0
23.0
25.0
27.0
29.0
31.0
$B_2O_3-(RO+R_2O-Al_2O_3)$ [mol%]


FIG. 2

FIG. 3

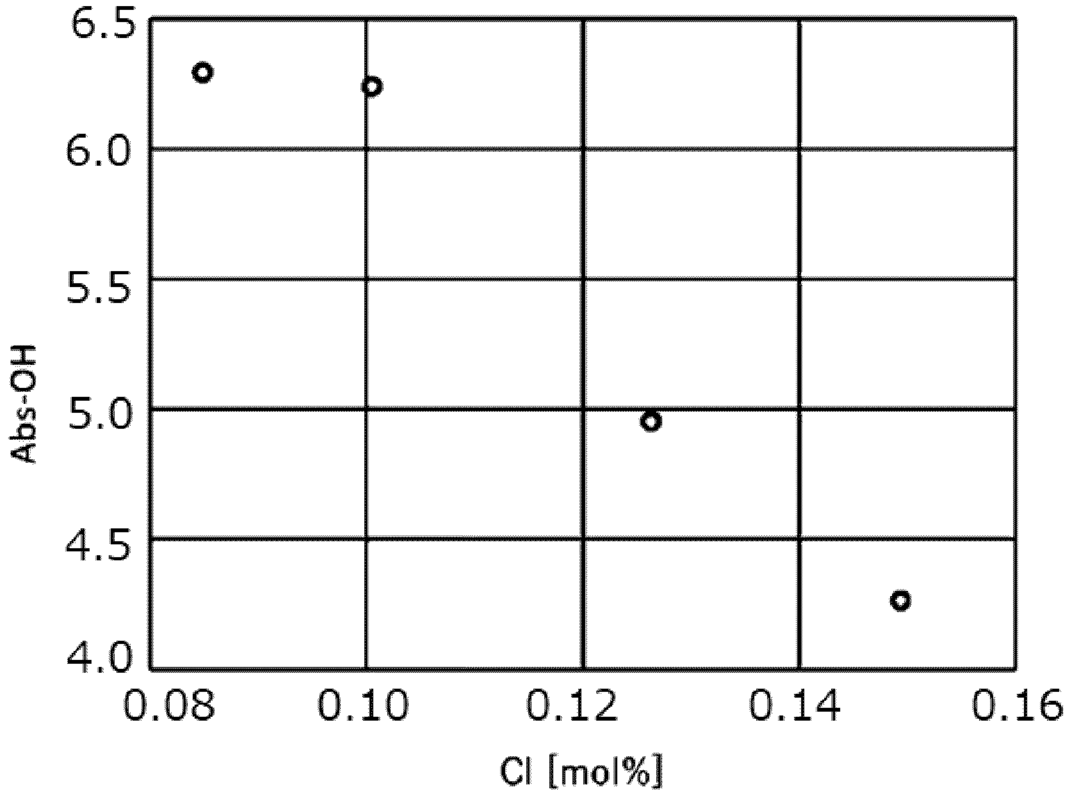

FIG. 4

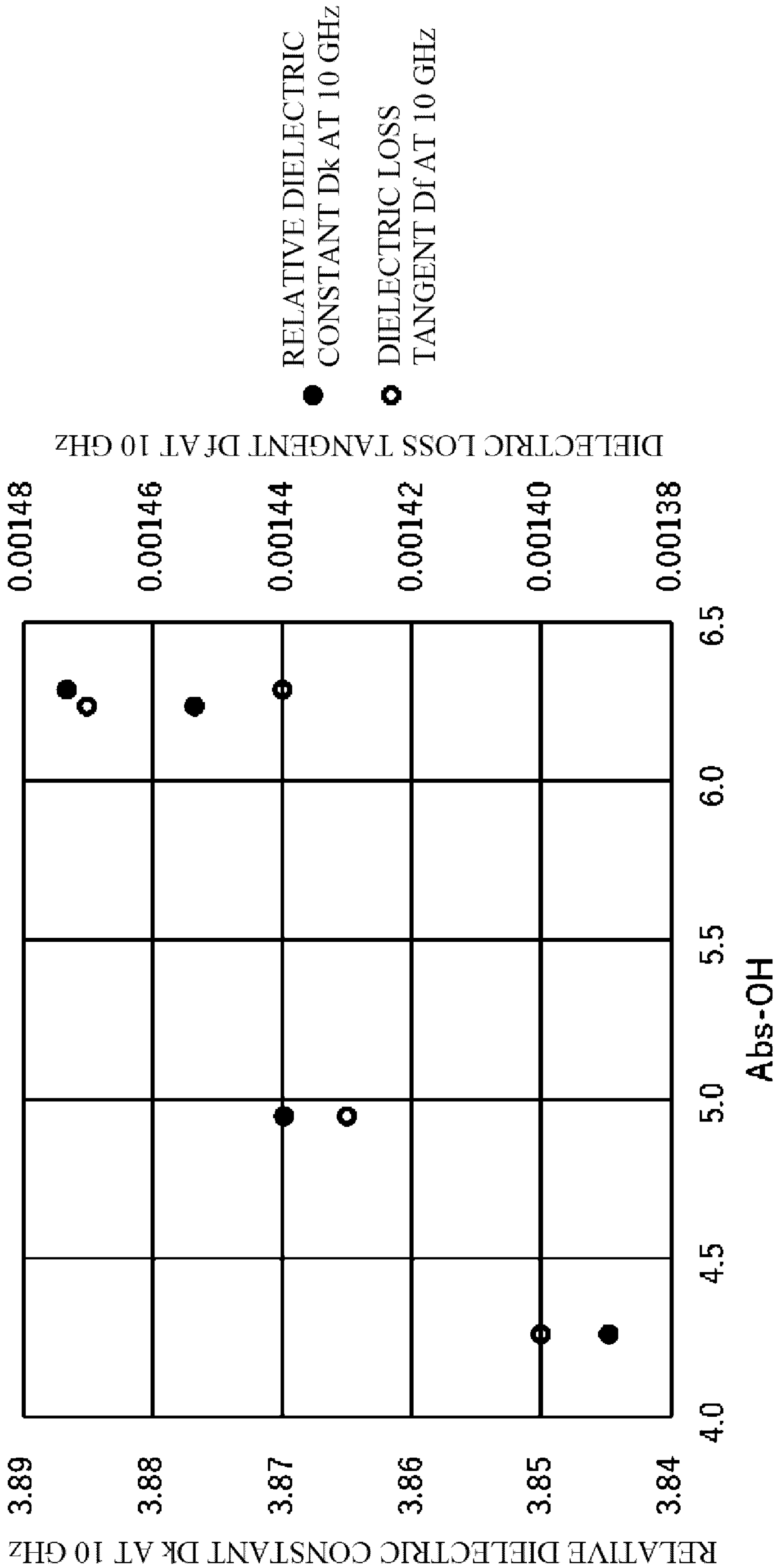
RELATIVE DIELECTRIC CONSTANT Dk AT 10 GHz
DIELECTRIC LOSS TANGENT Df AT 10 GHz
RELATIVE DIELECTRIC CONSTANT Dk AT 10 GHz
DIELECTRIC LOSS TANGENT Df AT 10 GHz
0.00148
0.00146
0.00144
0.00142
0.00140
0.00138
3.89
3.88
3.87
3.86
3.85
3.84
4.0
4.5
5.0
5.5
6.0
6.5
Abs-OH

**INTERNATIONAL SEARCH REPORT**

International application No.
**PCT/JP2023/016980**

**A. CLASSIFICATION OF SUBJECT MATTER**

***C03C 3/091***(2006.01)i; ***C03C 3/085***(2006.01)i; ***C03C 3/087***(2006.01)i
FI: C03C3/091; C03C3/085; C03C3/087

According to International Patent Classification (IPC) or to both national classification and IPC

**B. FIELDS SEARCHED**

Minimum documentation searched (classification system followed by classification symbols)

C03C3/091; C03C3/085; C03C3/087

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

INTERGLAD

**C. DOCUMENTS CONSIDERED TO BE RELEVANT**

| Category* | Citation of document, with indication, where appropriate, of the relevant passages | Relevant to claim No. |
|---|---|---|
| X | JP 61-106437 A (ASAHI GLASS CO., LTD.) 24 May 1986 (1986-05-24) claims, page 2, lower right column, lines 2-6, page 3, upper left column, lines 1-12, table 1, A | 1, 4-12 |
| X<br>A | JP 61-101431 A (CORNING GLASS WORKS) 20 May 1986 (1986-05-20) claims, examples 12-16, 23-27 | 2, 4, 6-10, 12<br>5, 11 |
| X<br>A | JP 62-2406 A (MATSUSHITA ELECTRIC IND. CO., LTD.) 08 January 1987 (1987-01-08) example 1, no. 60 | 3-4, 6-12<br>5 |
| A | JP 2013-522020 A (SAINT-GOBAIN CENTRE DE RECHERCHES ET D'ETUDES EUROPEEN) 13 June 2013 (2013-06-13) example 3, 3a | 1, 4-8 |
| A | US 4319215 A (HITACHI, LTD.) 09 March 1982 (1982-03-09) example 12 | 2, 4-8 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **18 July 2023** | **01 August 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2023/016980**

**C. DOCUMENTS CONSIDERED TO BE RELEVANT**

| Category* | Citation of document, with indication, where appropriate, of the relevant passages | Relevant to claim No. |
|---|---|---|
| A | JP 2001-525783 A (RICHTER, Robin) 11 December 2001 (2001-12-11) example 5 | 2, 4-8 |

Form PCT/ISA/210 (second sheet) (January 2015)

**INTERNATIONAL SEARCH REPORT**
**Information on patent family members**

International application No.
**PCT/JP2023/016980**

| Patent document cited in search report | Publication date (day/month/year) | Patent family member(s) | Publication date (day/month/year) |
|---|---|---|---|
| JP 61-106437 A | 24 May 1986 | US 4665039 A<br>claims, column 2, line 62 to column 3, line 4, column 3, lines 26-45, table 1, A | |
| JP 61-101431 A | 20 May 1986 | US 4605632 A<br>claims, examples 12-16, 23-27<br>EP 181690 A1<br>KR 10-1986-0003171 A | |
| JP 62-2406 A | 08 January 1987 | US 4812422 A<br>example 1, no. 60<br>KR 10-1990-0002303 B1 | |
| JP 2013-522020 A | 13 June 2013 | US 2013/0011304 A1<br>example 3, 3a<br>WO 2011/114050 A1<br>EP 2547417 A1<br>CN 102811789 A | |
| US 4319215 A | 09 March 1982 | DE 3026200 A | |
| JP 2001-525783 A | 11 December 2001 | US 6468932 B1<br>example 5<br>WO 1998/051631 A1<br>EP 973697 A1<br>CN 1263515 A<br>KR 10-0500393 B1<br>DE 19724874 A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2018051793 A
- JP 2022077216 A